# FASCICULE DE BREVET EUROPEEN

(11) **EP 3 574 135 B1**
(45) Date de publication et mention de la délivrance du brevet: **14.06.2023**
(21) Numéro de dépôt: 18705429.1
(22) Date de dépôt: 29.01.2018
(51) Int. Cl.: D01D 5/38, D01F 1/10, C08L 97/00, D01F 9/00, D01F 9/17, D01F 6/54

(54) **PROCÉDÉ ET FORMULATION POUR LA PRÉPARATION DE FIBRES DE LIGNINE**
VERFAHREN UND FORMULIERUNG ZUR HERSTELLUNG VON LIGNINFASERN
METHOD AND FORMULATION FOR PREPARING LIGNIN FIBRES

(30) Priorité: 27.01.2017 FR 1750688
(43) Date de publication de la demande: 04.12.2019
(73) Titulaire: Institut de Recherche Technologique Jules Verne, 44340 Bouguenais (FR); Faurecia Services Groupe, 92000 Nanterre (FR)
(72) Inventeur: FOURNIER, Teddy, 64160 Maucor (FR); JUNCA, Ludivine, 64140 Billère (FR); FACHE, Maxence, 33000 Bordeaux (FR); MERCADER, Célia, 33400 Talence (FR)
(74) Mandataire: Ipside
(86) Numéro de dépôt international: PCT/FR2018/050191
(87) Numéro de publication internationale: WO 2018/138450

(56) Documents cités:
- EP-A1- 2 644 758
- DE-A1-102014 004 797
- US-A1- 2012 071 591
- IDA NORBERG ET AL: "A new method for stabilizing softwood kraft lignin fibers for carbon fiber production", JOURNAL OF APPLIED POLYMER SCIENCE, vol. 128, no. 6, 12 octobre 2012 (2012-10-12), pages 3824-3830, XP055057622, ISSN: 0021-8995, DOI: 10.1002/app.38588
- JIAN LIN ET AL: "Improvement of Mechanical Properties of Softwood Lignin-Based Carbon Fibers", JOURNAL OF WOOD CHEMISTRY AND TECHNOLOGY, vol. 34, no. 2, 9 décembre 2013 (2013-12-09), pages 111-121, XP055412388, US ISSN: 0277-3813, DOI: 10.1080/02773813.2013.839707

## Description

La présente invention s'inscrit dans le domaine de la fabrication de fibres de carbone à partir de matériaux biosourcés.

Plus particulièrement, la présente invention concerne un procédé de préparation de fibres à base de lignine, par la technique de la voie fondue, ainsi qu'une formulation pour la mise en oeuvre de ce procédé. L'invention concerne également un extrudât, notamment sous forme de granulés, susceptible d'être obtenu en tant que produit intermédiaire lors de la mise en oeuvre dudit procédé.

Les fibres de carbone sont utilisées dans de nombreux domaines, mettant à profit leurs propriétés mécaniques, électriques et thermiques particulièrement avantageuses et leur faible poids.

La fabrication de fibres de carbone à partir de matières biosourcées renouvelables, afin de s'affranchir du problème de l'épuisement programmé des ressources fossiles, a fait l'objet de nombreuses recherches dans les dernières décennies. Il a en particulier été proposé par l'art antérieur de fabriquer de telles fibres à partir de lignine, une macromolécule de structure complexe à forte teneur en carbone qui constitue l'un des principaux composants du bois, et qui est présente en grande quantité dans la nature.

La lignine offre notamment l'avantage de pouvoir être obtenue au moyen de procédés non toxiques pour l'environnement et à faible coût. Elle peut en outre être mise en forme par filage pour former des fibres, qui peuvent être utilisées comme précurseurs des fibres de carbone.

Les procédés de fabrication de fibres de carbone à partir de lignines développés par l'art antérieur mettent globalement en oeuvre les étapes successives suivantes : la préparation de fibres à base de lignine, par filage d'une formulation contenant de la lignine, la stabilisation / structuration des fibres à base de lignine ainsi obtenues par un traitement thermique oxydatif, et la carbonisation des fibres stabilisées, pour former les fibres de carbone visées.

En particulier, la stabilisation des fibres à base de lignine est nécessaire pour éviter que ces fibres ne fondent lors de la montée en température à laquelle elles sont soumises lors de l'étape de carbonisation. De manière classique, à l'échelle du laboratoire, cette stabilisation est réalisée par réticulation de la lignine sous atmosphère oxydante, par exposition des fibres à des rampes de montée en température très lentes, d'environ 0,02 °C/min, pendant de très longues durées, typiquement de l'ordre de plusieurs heures et jusqu'à plusieurs jours, pour atteindre des températures aussi élevées que 300 à 400 °C. Ce procédé n'est cependant pas transposable industriellement en continu, car trop long et coûteux en énergie à mettre en oeuvre.

Il existe à l'heure actuelle deux principales techniques de filage pour la préparation de fibres à base de lignine : la technique dite par voie solvant ou humide, et la technique dite par voie fondue.

Les présents inventeurs se sont plus particulièrement intéressés à la technique de préparation des fibres par la voie fondue, dans laquelle les fibres sont formées par filage à l'état fondu, typiquement au moyen d'un dispositif d'extrusion, cette technique présentant les avantages d'une grande simplicité et d'une rapidité de mise en oeuvre. Schématiquement, la lignine est soumise à un gradient de température suffisamment élevé pour provoquer son fluage, ce qui permet de l'étirer pour former un fil.

Dans ce domaine particulier de la préparation de fibres à base de lignine par la technique de filage à l'état fondu, également nommé filage par fusion, il a été proposé par l'art antérieur, afin d'améliorer les propriétés d'aptitude au filage et la qualité de la lignine, de la modifier chimiquement et/ou de lui adjoindre différents additifs.

Le document DE 102014004797 décrit par exemple un procédé de préparation de fibres à base de lignine à partir d'une formulation contenant de la lignine modifiée chimiquement, plus particulièrement estérifiée ou étherifiée, et des additifs de fonctions diverses, telles qu'une fonction plastifiante et/ou une fonction réticulante. Un tel procédé ne permet cependant d'obtenir que des fibres à base de lignine de courte taille, de 10 à 20 cm environ. En outre, ces fibres doivent tout de même être soumises à un traitement thermique de stabilisation à haute température avant l'étape finale de carbonisation visant à obtenir les fibres de carbone. Comme exposé précédemment, la réalisation de cette étape de stabilisation thermo-oxydative est chronophage et énergivore.

Afin de stabiliser les fibres à base de lignine obtenues par filage par fusion, pour s'affranchir des problèmes liés à la mise en oeuvre de l'étape de stabilisation thermo-oxydative des fibres, il a autrement été proposé par l'art antérieur, illustré notamment par le document EP 2 644 758, d'incuber les fibres de lignine, obtenues par filage par fusion, avec un agent réticulant, à une température à laquelle il ne se produit aucune réticulation, puis de soumettre les fibres à une étape de traitement thermique à une température permettant la réticulation de la lignine des fibres avec l'agent réticulant. Si ce procédé peut être mis en oeuvre à des températures moins importantes et plus rapidement que les procédés de traitement thermique de stabilisation thermo-oxydative des fibres de l'art antérieur, il requiert cependant tout de même un chauffage important des fibres, et un certain temps de mise en oeuvre. L'étape de trempage des fibres dans un bain contenant l'agent réticulant est en particulier longue, coûteuse, techniquement complexe et contraignante à mettre en oeuvre.

La présente invention vise à remédier aux inconvénients des procédés de préparation des fibres à base de lignine proposés par l'art antérieur, notamment aux inconvénients exposés ci-avant, en proposant un procédé pour une telle préparation, et une formulation pour sa mise en oeuvre, qui permettent de former des fibres à base de lignine, y compris des fibres continues de longue taille, notamment de plusieurs centaines de mètres de long, qui soient suffisamment stables pour pouvoir être soumises directement à une étape de carbonisation, pour former des fibres de carbone, sans traitement thermique oxydatif de stabilisation intermédiaire, ou avec un traitement thermique intermédiaire de beaucoup plus courte durée.

Un objectif supplémentaire de l'invention est que de telles fibres à base de lignine puissent être obtenues rapidement, facilement, en peu d'étapes et à faible coût.

L'invention vise également à ce que ce procédé puisse s'appliquer à toutes formes de lignine, quels que soient leur origine et leur procédé d'obtention, et y compris aux formes de lignine non modifiée.

A cet effet, selon un premier aspect, il est proposé par la présente invention un procédé de préparation de fibres à base de lignine, précurseurs de fibres de carbone. Ce procédé comprend les étapes suivantes :
a/ le cas échéant, le mélange intime des composants d'une formulation comprenant :
   - de la lignine,
   - un agent plastifiant miscible, notamment à chaud, avec la lignine,
   - et un agent réticulant apte à réticuler avec la lignine,
   dans des conditions, en particulier des conditions de température et de temps, dans lesquelles il ne se produit pas de réticulation de l'agent réticulant et de la lignine,
b/ le filage de ce mélange intime dans un dispositif d'extrusion à chaud comportant une tête d'extrusion en partie terminale, pour former des fils continus, par application dans le dispositif d'extrusion de conditions, notamment de profils de température et de temps de séjour dans le dispositif, qui sont telles que :
   - les températures appliquées dans le dispositif d'extrusion sont supérieures à la température de transition vitreuse du mélange intime,
   - et les températures, le temps de séjour du mélange intime dans le dispositif d'extrusion, et le temps de séjour du mélange intime dans la tête d'extrusion sont tels que la réaction de réticulation de l'agent réticulant et de la lignine est initiée dans la tête d'extrusion, et uniquement dans cette dernière,
c/ le cas échéant, l'étirage, notamment continu, des fils à base de lignine obtenus, pour former des fibres à base de lignine de grande longueur.

L'agent réticulant est choisi de telle sorte que sa réaction de réticulation avec la lignine est initiée en un temps inférieur au temps de séjour du mélange intime dans la tête d'extrusion à partir d'une température supérieure d'au moins 10°C à la température de transition vitreuse du mélange intime de la lignine et de l'agent plastifiant.

On désignera dans la suite de la présente description, par commodité, par l'expression « température de réticulation opérante », la température la plus basse à laquelle une réaction de réticulation de l'agent réticulant et de la lignine est initiée en un temps inférieur au temps de séjour du mélange intime dans la tête d'extrusion, qui constitue la partie terminale du dispositif d'extrusion. Selon l'invention, l'agent réticulant est choisi de telle sorte que cette température de réticulation opérante soit supérieure d'au moins 10 °C à la température de transition vitreuse du mélange intime de la lignine et de l'agent plastifiant.

Selon l'invention, le choix de l'agent réticulant, et des conditions de température et de temps de séjour du mélange intime dans les différentes parties du dispositif d'extrusion, est de préférence réalisé concomitamment, de sorte à permettre de réaliser un ramollissement du mélange intime qui soit suffisant pour le filage du mélange intime et la formation de fils à base de lignine, tout en initiant la réaction de réticulation de l'agent réticulant et de la lignine dans la partie terminale du dispositif d'extrusion, et uniquement dans cette dernière.

Il entre dans les compétences de l'homme du métier de réaliser un tel choix conjoint, en sachant que typiquement, le temps de séjour de la matière dans la partie terminale d'un dispositif d'extrusion est de quelques dizaines de secondes à quelques minutes, par exemple comprise entre 30 secondes et 10 minutes, notamment comprise entre 30 secondes et 5 minutes.

L'homme du métier sait parfaitement déterminer, en fonction du dispositif d'extrusion qu'il met en oeuvre, quelle partie en constitue la tête d'extrusion. Typiquement, il s'agit de la partie terminale du dispositif, se trouvant en aval des zones d'alimentation du dispositif en matière et de convoyage de cette matière, dans le sens d'écoulement de la matière, et au niveau de laquelle est réalisée la mise en forme de la matière. La tête d'extrusion est notamment terminée par la filière de filage.

Par le terme lignine, on englobe selon la présente invention aussi bien une lignine unique, qu'un mélange de différentes lignines.

De même, on englobe par l'expression « agent plastifiant », outre un agent plastifiant unique, tout mélange d'une pluralité d'agents plastifiants, et, par l'expression « agent réticulant », outre un agent réticulant unique, tout mélange d'une pluralité d'agents réticulants.

Par ailleurs, entrent également dans la portée de l'invention les procédés selon lesquels l'agent plastifiant et l'agent réticulant sont formés par un seul et même composé, qui réunit à lui seul la fonction plastifiante et la fonction réticulante, et les caractéristiques d'être miscible avec la lignine et d'être apte à initier une réaction de réticulation avec cette dernière en un temps inférieur au temps de séjour du mélange intime dans la tête d'extrusion du dispositif d'extrusion, à partir d'une température supérieure d'au moins 10°C à la température de transition vitreuse du mélange intime qu'il forme avec la lignine.

Par mélange intime de la lignine et de l'agent plastifiant, on entend, de manière classique en elle-même, un mélange obtenu par mélangeage de ces composants à une température supérieure ou égale à la température de transition vitreuse de la lignine et à la température de ramollissement de l'agent plastifiant, notamment à la température de fusion de l'agent plastifiant lorsque celui-ci est un matériau cristallin ou semi-cristallin. Typiquement, la température de transition vitreuse du mélange intime de la lignine et de l'agent plastifiant est inférieure à celle de la lignine seule.

On entend dans la présente description, par température de ramollissement de l'agent plastifiant, la température à partir de laquelle cet agent plastifiant devient suffisamment fluide pour pouvoir être mélangé intimement avec la lignine et l'agent réticulant, par toute technique classique en elle-même pour la formation de mélanges intimes de composés, notamment par extrusion.

La température de ramollissement peut être déterminée par toute méthode d'analyse thermique et/ou thermomécanique classique permettant de mettre en évidence les propriétés rhéologiques et/ou mécaniques en température de l'agent plastifiant considéré. Cette analyse peut par exemple être une mesure de l'indice de fluidité à chaud (MFI, pour l'anglais Melt Flow Index) de l'agent plastifiant à différentes températures, comme explicité de manière détaillé plus avant dans la présente description.

La température de transition vitreuse, désignée par l'abréviation Tg, du mélange intime de la lignine et de l'agent plastifiant dépend des caractéristiques particulières de la lignine et de l'agent plastifiant mis en oeuvre, notamment de la masse molaire de l'agent plastifiant, ainsi que de leurs proportions respectives dans le mélange. Il entre dans les compétences de l'homme du métier de déterminer, pour chaque mélange lignine - agent plastifiant donné, quelle est la température de transition vitreuse associée. A cet effet, l'homme du métier pourra notamment préparer un mélange intime de ces constituants, dans les proportions de la formulation selon l'invention, selon toute méthode classique en elle-même, puis en mesurer la température de transition vitreuse. L'homme du métier pourra pour cela mettre en oeuvre tout procédé classique en lui-même, tel que l'analyse mécanique dynamique (DMA).

Dans le cadre de l'invention, la température de transition vitreuse du mélange intime de la lignine et de l'agent plastifiant est de préférence mesurée par analyse mécanique dynamique, notamment selon la méthode suivante : à partir d'échantillons parallélépipédiques de dimensions 5 mm x 2 mm x 0,8 mm du matériau, on met en oeuvre un analyseur DMA 1 de Mettler Toledo en sollicitation en tension, en opérant à 1 Hz, avec une rampe de 2 °C/min et un déplacement de 2 µm.

Selon l'invention, la réticulation de l'agent réticulant et de la lignine est avantageusement réalisée, au moins partiellement, dans le dispositif d'extrusion lui-même. L'agent réticulant y réagit avec la lignine, pour créer un réseau tridimensionnel qui stabilise les fibres, et qui s'étend dans l'intégralité des fils obtenus, y compris au coeur des fibres. Cette stabilisation est avantageusement suffisante pour permettre une carbonisation directe des fibres à base de lignine ainsi obtenues, sans qu'il soit notamment nécessaire de les soumettre au préalable à un traitement thermo-oxydatif de stabilisation, ou du moins à rien d'autre qu'un traitement thermique de très courte durée. Un exemple de tel traitement thermique ultérieur peut par exemple consister en un chauffage des fibres dans un four, sous oxygène ou sous azote par exemple, pendant une durée de quelques dizaines de minutes, par exemple d'environ 30 minutes, de sorte à achever rapidement la réticulation de l'agent réticulant et de la lignine débutée dans le dispositif d'extrusion.

La réticulation n'est en outre avantageusement amorcée que dans la zone terminale du dispositif d'extrusion, au niveau de la tête d'extrusion elle-même, si bien que cette réticulation ne ralentit, ni ne bloque, en aucun cas l'étape de filage du procédé selon l'invention.

L'introduction, dans la formulation selon l'invention, de l'agent réticulant, et son mélange intime avec la lignine, avant de procéder au filage en voie fondue, permet de former, à l'issue de l'étape de filage, une fibre contenant la lignine et l'agent plastifiant, qui présente une tenue mécanique suffisante pour supporter, sans rompre, la montée en température nécessaire à l'étape ultérieure de carbonisation.

Par rapport aux méthodes proposées par l'art antérieur pour réaliser la stabilisation des fibres de lignine, notamment par réticulation de la lignine sous atmosphère oxydante avec des rampes de montée en température très lentes, le procédé selon l'invention permet ainsi bien plus facilement et plus rapidement d'obtenir des fibres prêtes à être soumises à l'étape de carbonisation, et ce à moindre coût.

Le procédé selon l'invention permet avantageusement d'obtenir des fibres continues de grande longueur, notamment de plusieurs centaines, voire plusieurs milliers de mètres.

En outre, il peut s'appliquer, avec le même succès, aux lignines de toute origine et de toute nature et quel que soit le procédé ayant permis leur obtention. Il s'applique également, avec la même efficacité, à toute forme de lignine, y compris aux lignines non chimiquement modifiées. Il s'applique notamment aux lignines présentant une faible faculté à se thermo-oxyder.

Il est facile et rapide à mettre en oeuvre, et il ne comporte que peu d'étapes. La fibre à base de lignine obtenue en sortie du dispositif d'extrusion peut en outre avantageusement être mise en bobine directement, ou après le cas échéant une simple étape d'étirage.

Ce procédé permet d'obtenir à bas coût des fibres à base de lignine aptes à être soumises à une étape de carbonisation pour former des fibres de carbone.

Le procédé de préparation par la voie fondue de fibres à base de lignine selon l'invention peut répondre à l'une ou plusieurs des caractéristiques décrites ci-après, mises en oeuvre isolément ou en chacune de leurs combinaisons techniquement opérantes.

Dans des modes de mise en oeuvre particuliers de l'invention, l'agent réticulant est choisi pour être apte à initier une réaction de réticulation avec la lignine en moins de 10 minutes, de préférence en moins de 5 minutes, à une température comprise entre 30 et 190°C, de préférence comprise entre 80 et 170°C.

Préférentiellement, il est en outre choisi pour être apte à réticuler avec la lignine à une température comprise entre -15 et 25 °C, notamment à température ambiante, c'est-à-dire à une température d'environ 20 °C, et plus largement comprise entre 15 et 25 °C, la réticulation à ces températures étant alors lente.

Dans des modes de mise en oeuvre particuliers de l'invention, dans la formulation, l'agent plastifiant permet, de manière classique, de rendre la lignine plus filable, à une température plus basse.

Dans la formulation selon l'invention, la lignine et l'agent plastifiant sont de préférence tels, et en proportions telles, que la température de transition vitreuse du mélange intime de ladite lignine et dudit agent plastifiant est comprise entre 0 et 180 °C, notamment comprise entre 20 et 180°C, de préférence entre 20 et 100 °C, notamment entre 20 et 80 °C, et par exemple environ égale à 60 °C. Une telle caractéristique permet avantageusement d'opérer, pour la mise en oeuvre des étapes du procédé de préparation de fibres à base de lignine selon l'invention, à des températures relativement basses, qui ne provoquent pas de dégradation des différents composants de la formulation, et qui peuvent être atteintes avec une consommation d'énergie faible.

La lignine entrant dans la composition de la formulation selon l'invention peut être de tout type.

Par lignine, on entend notamment dans la présente description aussi bien la lignine essentiellement pure, non modifiée, que ses dérivés. Le terme dérivés englobe selon la présente invention les produits de fractionnement partiel de la lignine, ainsi que les dérivés chimiques de la lignine, notamment les lignines estérifiées ou éthérifiées.

Dans des modes de réalisation particuliers de l'invention, la lignine mise en oeuvre dans la formulation est une lignine non chimiquement modifiée. On entend par là que la lignine n'a été soumise à aucune étape de modification chimique, notamment à aucune étape d'estérification, éthérification, et/ou réaction introduisant dans sa formule un ou des groupements sulfonate, phosphate, phosphonate, phosphinate, phosphite, phosphonite, phosphinite, etc.

La lignine peut notamment être introduite dans la formulation sous forme d'un sel, ou encore d'un extrait partiellement purifié, la contenant en mélange avec d'autres composants. Un tel extrait peut être obtenu selon toute méthode classique en elle-même pour l'homme du métier. Par exemple, la lignine peut être introduite dans la formulation sous forme partiellement purifiée, telle que la lignine Kraft ou la lignine Soda, ou encore sous forme de lignine Organosolv, ou de tout mélange de telles lignines.

La lignine entrant dans la composition de la formulation selon l'invention présente de préférence un poids moléculaire élevé, notamment une masse molaire moyenne en masse comprise entre 1 000 et 100 000 g/mol, de préférence comprise entre 1 500 et 10 000 g/mol, par exemple comprise entre 3 000 et 10 000 g/mol, et notamment comprise entre 5 000 et 10 000 g/mol ; et/ou masse molaire moyenne en nombre comprise entre 300 et 100 000 g/mol, de préférence comprise entre 400 et 10 000 g/mol, et notamment comprise entre 500 et 10 000 g/mol.

La masse molaire moyenne en masse et la masse molaire moyenne en nombre de la lignine peuvent être déterminées par toute méthode conventionnelle, notamment par chromatographie d'exclusion stérique (GPC). Pour la mise en oeuvre de cette technique, l'homme du métier peut par exemple choisir comme éluant le tétrahydrofurane, de manière classique en soi. Dans ce cas, la lignine à analyser doit d'abord être dérivatisée afin de la mettre en solution. Cela peut être accompli en acétylant la lignine, par exemple en la faisant réagir avec de l'anhydride acétique en présence de pyridine. Après purification de la lignine acétylée, celle-ci peut être mise en solution dans le tétrahydrofurane, filtrée et analysée par GPC à température ambiante. Les masses molaires moyennes en nombre et en masse peuvent alors être déterminées à partir de courbes d'étalonnage, par exemple réalisées avec du polystyrène.

Une lignine particulièrement préférée dans le cadre de l'invention est la lignine commercialisée sous la dénomination Protobind 2400 par la société GreenValue. Il s'agit d'une lignine soda sans soufre, obtenue à partir de paille de blé, présentant une température de transition vitreuse comprise entre 100 et 120 °C, une masse molaire moyenne en nombre d'environ 1000 g/mol et une masse molaire moyenne en masse, mesurée par GPC comme exposé ci-avant, comprise entre 1 500 et 3 500 g/mol, plus particulièrement égale à 2 000 g/mol. Cette lignine présente en outre notamment un taux de carbone compris entre 55 et 65 % des atomes, un taux de fonctions -OH aliphatiques compris entre 1 et 2 mmol/g, un taux de fonctions -OH aromatiques compris entre 2,5 et 3 mmol/g, et un taux de fonctions -COOH compris entre 0,5 et 1 mmol/g.

Une autre lignine pouvant être mise en oeuvre dans le cadre de l'invention est notamment la lignine de type Kraft commercialisée sous la dénomination BioPiva^{®} 100 (anciennement BioChoice^{®}) par la société UPM. Cette lignine présente notamment : une température de transition vitreuse comprise entre 130 et 160 °C ; une masse molaire moyenne en masse comprise entre 8 000 et 10 000 g/mol ; un taux de carbone compris entre 60 et 70 % des atomes ; un taux de fonctions -OH aliphatiques compris entre 1,5 et 2 mmol/g ; un taux de fonctions -OH aromatiques compris entre 3,5 et 4 mmol/g ; et un taux de fonctions -COOH compris entre 0 et 0,5 mmol/g.

L'agent plastifiant entrant dans la composition de la formulation selon l'invention est de préférence de type polymère. Dans le terme « polymères », on englobe ici également les copolymères et les mélanges de polymères et/ou copolymères. L'agent plastifiant est de préférence choisi parmi les polyéthers, les polycarboxylates et les polyesters, tels que par exemple le poly(oxyde d'éthylène) (PEO), le polyéthylène téréphthalate ou le polycaprolactone, ou tout mélange de tels polymères. Dans des modes de réalisation particuliers de l'invention, l'agent plastifiant est un polymère d'acrylonitrile fusible, couramment désigné par l'expression « PAN fusible ». On inclut dans cette définition tout polymère ou copolymère d'acrylonitrile adapté à être mis en oeuvre dans un procédé d'extrusion en voie fondue.

L'agent plastifiant selon l'invention peut autrement être choisi parmi tous les copolymères dont au moins un des segments monomères appartient à une des familles de polymères ci-dessus. Des exemples de tels copolymères sont les copolymères poly(oxyde d'éthylène)-co-poly(oxyde de propylène) (PEO-co-PPO), tel que le copolymère commercialisé sous le nom Alkox^{®} CP-A2H), et plus généralement tous les copolymères comportant un bloc polyéther et/ou un bloc polyacrylonitrile.

Pour l'agent plastifiant, on pourra en particulier avantageusement choisir comme PAN fusible un copolymère de polyacrylonitrile et de méthylacrylate, notamment un poly(acrylonitrile-co-acrylate de méthyle)-block-poly(acrylonitrile-co-butadiène), tels que les copolymères commercialisés sous le nom Barex^{®}, notamment le Barex^{®} 210 ou des dérivés commerciaux connus.

La mise en oeuvre de PAN fusible en tant qu'agent plastifiant s'avère notamment tout à fait avantageuse en termes de propriétés mécaniques et stabilité dans le temps des fibres obtenues. Ces fibres présentent notamment une grande flexibilité et une tenue au filage particulièrement bonne.

L'agent plastifiant mis en oeuvre présente de préférence une masse molaire moyenne en masse supérieure à 100 g/mol, préférentiellement supérieure ou égale à 160 g/mol. Une telle caractéristique confère à la formulation selon l'invention une viscosité à chaud suffisamment élevée pour lui permettre d'être facilement manipulée lors de la réalisation des étapes du procédé selon l'invention, et pour assurer une bonne tenue mécanique de la fibre à base de lignine obtenue à l'issue de ce procédé.

Plus particulièrement, lorsque l'agent plastifiant appartient à la famille des polyéthers, sa masse molaire moyenne en masse est de préférence comprise entre 500 et 10 000 000 g/mol, de préférence entre 100 000 et 1 000 000 g/mol, notamment entre 300 000 et 600 000 g/mol et préférentiellement entre 300 000 et 500 000 g/mol.

Lorsque l'agent plastifiant appartient à la famille des polycarboxylates, sa masse molaire moyenne en masse est de préférence comprise entre 10 000 et 500 000 g/mol, de préférence entre 50 000 et 300 000 g/mol et préférentiellement entre 10 000 et 200 000 g/mol ; sa masse molaire moyenne en nombre est quant à elle de préférence comprise entre 100 et 100 000 g/mol, de préférence entre 500 et 50 000 g/mol et préférentiellement entre 500 et 30 000 g/mol.

Lorsque l'agent plastifiant appartient à la famille des polymères d'acrylonitrile, sa masse molaire moyenne en nombre est de préférence comprise entre 500 et 10 000 000 g/mol, de préférence entre 50 000 et 1 000 000 g/mol et préférentiellement entre 50 000 et 500 000 g/mol.

En fonction de sa nature, l'agent plastifiant entrant dans la composition de la formulation selon l'invention peut présenter une température de transition vitreuse, ou plusieurs températures de transition vitreuse.

L'agent plastifiant entrant dans la composition de la formulation selon l'invention présente de préférence une température de transition vitreuse, le cas échéant des températures de transition vitreuse, inférieure(s) à 150 °C, de préférence inférieure(s) à 130 °C. Préférentiellement, au moins une des températures de transition vitreuse de l'agent plastifiant est comprise entre - 100 et 100 °C, de préférence comprise entre -60 et 60 °C, ou encore entre -40 et +70 °C. Une telle caractéristique permet avantageusement d'obtenir une température de ramollissement relativement basse pour le mélange intime de la lignine et de l'agent plastifiant, si bien qu'il est possible de transformer ce mélange à une température relativement basse, à laquelle il ne se produit pas de dégradation de ses constituants.

Des exemples d'agents plastifiants pouvant être mis en oeuvre dans la formulation selon l'invention sont notamment :
- le poly (oxyde d'éthylène) commercialisé sous la dénomination Alkox^{®} E30 par la société Meisei Chemical Works LTD. Ce produit présente une température de transition vitreuse comprise entre -50 et -60 °C, une température de fusion comprise entre 55 et 60 °C, une masse molaire moyenne en masse comprise entre 400 000 et 550 000 g/mol et une masse molaire moyenne en nombre comprise entre 300 000 et 400 000 g/mol ;
- le polycarboxylate éther commercialisé sous la dénomination Ethacryl^{®} HF par la société Coatex. Ce produit présente une température de transition vitreuse comprise entre -45 et -60 °C et une température de fusion comprise entre 35 et 45 °C ;
- le copolymère poly(acrylonitrile-co-acrylate de méthyle)-block-poly(acrylonitrile-co-butadiène) commercialisé sous la dénomination Barex^{®} 210. Ce produit présente deux températures de transition vitreuse comprises respectivement entre 60 et 70 °C et entre 125 et 135 °C.

L'agent réticulant entrant dans la composition de la formulation selon l'invention est quant à lui de préférence de type moléculaire. Tout agent réticulant classique en lui-même pour la réticulation des résines phénoliques peut être mis en oeuvre selon l'invention.

L'agent réticulant est de préférence choisi parmi :
- les benzoxazines, les époxy, les oxazolines, les polyoxyméthylènes, tels que le paraformaldéhyde, les aldéhydes, tels que le glutaraldéhyde, le formaldéhyde, le furfural, etc., l'hexaméthylènetétramine et l'hexaméthylèneméthoxymélamine ;
- les composés présentant une fonctionnalité supérieure ou égale à deux dont les fonctions chimiques sont choisies dans le groupe constitué des fonctions : benzoxazine, époxy, en particulier glycidyl éther, isocyanate, anhydride, acide carboxylique, méthylol et ester, ces fonctions chimiques pouvant être identiques ou différentes,
ou tout mélange de tels composés.

L'agent réticulant mis en oeuvre selon l'invention présente de préférence une température de réticulation opérante avec la lignine comprise entre 30 et 190 °C et de préférence entre 80 et 170 °C.

Des exemples d'agents réticulants pouvant être mis en oeuvre dans la formulation selon l'invention sont notamment :
- le bisbenzoxazine de bisphénol F commercialisé sous la dénomination Araldite^{®} MT 35700 par la société Huntsman. Ce produit présente une température de transition vitreuse de 73,6 °C, et une température de réticulation opérante avec la lignine de 190 °C ;
- le diglycidyléther de bisphénol A commercialisé sous la dénomination Epolam^{®} 8056R par la société Axson. Ce produit présente une température de transition vitreuse d'environ -20 °C, une température de réticulation opérante avec la lignine de 120 °C et une masse molaire inférieure à 700 g/mol ;
- le 1,3-phénylène-bis-oxazoline commercialisé sous la dénomination Nexamite^{®} PBO par la société Nexamite. Ce produit présente une température de fusion de 149 °C, une masse molaire d'environ 216 g/mol, et il est apte à initier une réaction de réticulation avec la lignine en moins de 10 minutes à une température supérieure ou égale à 100 °C.

Dans des modes de mise en oeuvre particuliers de l'invention, dans lesquels l'agent plastifiant et l'agent réticulant sont constitués par un seul et même composé, ce composé est notamment un polymère à fonction plastifiante, fonctionnalisé de sorte à présenter également une fonction réticulante. A titre de tel composé, on peut notamment citer les polyéthers fonctionnalisés par des fonctions époxy.

La formulation selon l'invention peut contenir les pourcentages en poids suivants, par rapport au poids total de la formulation :
- 50 à 98 %, de préférence 60 à 90 %, et préférentiellement 65 à 80 %, de lignine,
- et/ou 1 à 49 %, de préférence 5 à 30 %, et préférentiellement 10 à 25 %, d'agent plastifiant,
- et/ou 1 à 25 %, de préférence 2 à 10 %, et préférentiellement 2,5 à 5 %, d'agent réticulant.

De telles proportions assurent avantageusement des propriétés optimales, notamment en termes de tenue mécanique et de facilité de préparation, des fibres à base de lignine formées conformément à l'invention.

La formulation selon l'invention peut en outre comporter un ou plusieurs autres additifs, visant à mieux structurer la matière, à améliorer les propriétés mécaniques des fibres formées, etc.

Chacun de ces additifs peut notamment être présent dans la formulation à une teneur comprise entre 1 ppm et 10 % en poids, par rapport au poids total de la formulation, de préférence entre 1 ppm et 5 % en poids, par exemple entre 100 ppm et 1 % en poids, par rapport au poids total de la formulation.

Des exemples d'additifs pouvant entrer dans la composition de la formulation selon l'invention sont les agents compatibilisants, tels que des polymères ou co-polymères greffés anhydrides maléiques. A titre d'exemple, on peut notamment citer le Lotader^{®} 3300 commercialisé par la société Arkema, ou encore le Beiwa^{®} 901 de DzBh.

La formulation selon l'invention peut par exemple comprendre un ou plusieurs additifs choisis parmi les charges carbonées de taille nanométrique, notamment parmi les nanotubes de carbone et le graphène, seuls ou en mélange.

On entend ici, par « nanocharge carbonée », une charge comprenant un élément du groupe formé des nanotubes de carbone, des nanofibres de carbone, du graphène, des fullerènes et du noir de carbone, ou tout mélange de tels éléments. De préférence, les nanocharges carbonées intégrées dans la formulation selon l'invention sont des nanotubes de carbone, seuls ou en mélange avec du graphène. Des nanotubes de carbone sont par exemple commercialisés par la société ARKEMA sous le nom Graphistrength^{®}.

Les nanocharges carbonées selon la présente invention peuvent présenter une plus petite dimension comprise entre 0,1 à 200 nm, de préférence entre 0,1 et 160 nm, et préférentiellement entre 0,1 et 50 nm. Cette dimension peut par exemple être mesurée par diffusion de la lumière.

On entend par « graphène », selon la présente invention, un feuillet de graphite plan, isolé et individualisé, mais aussi, par extension, un assemblage comprenant entre un et quelques dizaines de feuillets et présentant une structure plane ou plus ou moins ondulée. Cette définition englobe ainsi les FLG (pour l'anglais Few Layer Graphene, c'est-à-dire du graphène faiblement empilé), les NGP (pour l'anglais Nanosized Graphene Plates, c'est-à-dire des plaques de graphène de dimension nanométrique), les CNS (pour l'anglais Carbon NanoSheets, c'est-à-dire des nano-feuilles de graphène), les GNR (pour l'anglais Graphene NanoRibbons, c'est-à-dire des nano-rubans de graphène). Elle exclut en revanche les nanotubes et nanofibres de carbone, qui sont respectivement constitués de l'enroulement d'un ou plusieurs feuillets de graphène de manière coaxiale et de l'empilement turbostratique de ces feuillets.

Il entre dans les compétences de l'homme du métier de déterminer, en fonction des caractéristiques particulières des composés mis en oeuvre, quelles conditions, notamment de température et de temps, doivent être appliquées pour la réalisation de l'étape a/ de mélange intime des composants de la formulation, de sorte à réaliser ce mélange intime sans provoquer la réticulation de l'agent réticulant et de la lignine.

Dans des modes de mise en oeuvre particuliers de l'invention, l'étape a/ de mélange intime des composants de la formulation comprend les sous-étapes suivantes, ces sous-étapes pouvant être mises en oeuvre successivement ou simultanément, au moins partiellement :
a1/ la préparation de la formulation, par mélange de ses composants, notamment de la lignine, de l'agent plastifiant et de l'agent réticulant,
a2/ et le mélange par extrusion, notamment par fusion, desdits composants de la formulation, à une température supérieure à la température de transition vitreuse de la lignine et à la température de ramollissement, notamment de fusion lorsqu'il s'agit d'un matériau cristallin ou semi-cristallin, de l'agent plastifiant, pour former un extrudât dans lequel la lignine, l'agent plastifiant et l'agent réticulant se trouvent en mélange intime.

En particulier, pour la sous-étape a1/ de mélange des composants de la formulation, les composants à l'état solide peuvent tout d'abord être mélangés par action mécanique, par exemple au moyen d'une bétonnière, de préférence à température ambiante, de sorte à former un mélange sec.

Les composants liquides éventuels peuvent quant à eux être incorporés à ce moment-là dans ce mélange sec, ou ultérieurement au cours de l'étape a2/ de mélange par extrusion, notamment par fusion, des composants de la formulation, dans l'appareil utilisé pour la réalisation de cette étape. Ainsi, la formulation selon l'invention peut être formée soit en amont de cet appareil, soit dans cet appareil lui-même, extemporanément, au moment de la préparation du mélange intime des composants de la formulation selon l'invention.

Il est notamment tout à fait avantageux dans le cadre de la présente invention d'intégrer l'agent réticulant à la formulation dans l'appareil permettant de former, notamment par fusion, le mélange intime des constituants de la formulation, de sorte à réduire au maximum l'exposition de cet agent réticulant à des températures élevées, et à éviter de ce fait les risques de déclenchement de sa réaction de réticulation avec la lignine.

L'appareil mis en oeuvre pour la réalisation de cette sous-étape a2/, de mélange par extrusion, notamment par fusion, des composants de la formulation selon l'invention, peut être de tout type classique en lui-même pour une telle opération, communément désignée par le terme de compoundage. Il peut notamment s'agir d'un dispositif de mélange par extrusion classique en lui-même, par exemple un dispositif d'extrusion du type bi-vis, d'un comalaxeur, d'un mélangeur interne, etc.

L'extrudât obtenu à l'issue de la sous-étape a2/, qui est formé en un matériau consistant en un mélange intime des composants de la formulation, peut ensuite être soumis à l'étape b/ de filage du procédé selon l'invention, de préférence après avoir été préalablement refroidi, par exemple à l'air ou par tout autre effluent qui ne dégraderait pas le matériau, puis mis en forme sous forme de granulés.

Dans des modes de mise en oeuvre particuliers du procédé selon l'invention, dans l'étape a/, le mélange intime des composants de la formulation est préférentiellement réalisé à la température la plus basse possible, de sorte à éviter au maximum toute dégradation des matériaux mis en oeuvre, en étant bien entendu qu'il doit être réalisé à une température supérieure ou égale à la température de transition vitreuse de la lignine, qui est généralement comprise entre 100 à 160 °C, et à la température de ramollissement, notamment à la température de fusion lorsqu'il s'agit d'un matériau cristallin ou semi-cristallin, de l'agent plastifiant, qui est généralement comprise entre 30 et 150 °C, et par exemple comprise entre 30 et 60 °C.

En particulier, la sous-étape a2/ de mélange par extrusion, notamment par fusion, est de préférence réalisée à une température comprise entre la température de transition vitreuse du mélange intime de la lignine et de l'agent plastifiant, et 100 °C au-dessus de cette température.

A titre d'exemple, lorsque le matériel utilisé pour la réalisation de cette étape est un dispositif d'extrusion comportant une trémie d'alimentation, une cuve de malaxage, un moyen de convoyage et une filière d'extrusion, les températures au niveau de ces différentes zones peuvent être choisies comme suit :
- température de la zone d'alimentation comprise entre 0 et 100 °C, de préférence 20 et 80 °C, et préférentiellement 40 et 60 °C ;
- température de la zone de malaxage comprise entre 60 et 180 °C, de préférence 90 et 160 °C, et préférentiellement 100 et 130 °C ou encore 110 et 150 °C ;
- température de la zone de convoyage comprise entre 60 et 180 °C, de préférence 90 et 160 °C, et préférentiellement 100 et 130 °C ou encore 110 et 150 °C ;
- température de la filière d'extrusion comprise entre 60 et 180 °C, de préférence 90 et 160°C, préférentiellement 110 et 150 °C et par exemple 110 et 140 °C.

L'avantage de tels profils de basses températures est, d'une part, d'éviter la dégradation de la matière principale qui est la lignine ; d'autre part, en lien avec un temps de séjour très court de la matière dans le dispositif, par exemple inférieur à 5 minutes, il permet d'éviter la réticulation des composant du mélange intime afin de pouvoir envisager une nouvelle extrusion des granulés obtenus, pour l'étape b/ de filage.

Le temps de séjour de la matière dans le dispositif d'extrusion, pour la réalisation de l'étape a/ de mélange intime des composants, est variable et choisi en fonction des caractéristiques particulières des composés mis en oeuvre. Il peut par exemple être d'environ 1 minute. A l'issue de cette étape a/, on récupère des joncs de quelques millimètre de diamètre, qui sont soumis à l'étape suivante du procédé.

Dans des modes de mise en oeuvre particuliers de l'invention, le procédé comprend une étape préalable d'étuvage des composants de la formulation, de préférence à 80 °C et pendant au moins quatre heures.

Dans des modes de mise en oeuvre particuliers de l'invention, dans l'étape b/ de filage du mélange intime des composants de la formulation, il est appliqué dans la tête d'extrusion une température qui est supérieure à la température de transition vitreuse dudit mélange intime, d'une valeur comprise entre 10 et 150 °C, de préférence entre 30°C et 100°C, et préférentiellement comprise entre 60 °C et 90°C.

On entend par là que la température appliquée dans la tête d'extrusion est égale à la température de transition vitreuse du mélange intime des composants de la formulation, additionnée d'une valeur comprise entre 10 °C et 150 °C, de préférence d'une valeur comprise entre 30°C et 100°C, et préférentiellement d'une valeur comprise entre 60 °C et 90 °C.

Dans cette étape b/ de filage du mélange intime des composants de la formulation, il est en outre appliqué dans la tête d'extrusion une température supérieure ou égale à la température de réticulation opérante de l'agent réticulant avec la lignine.

La température de la tête d'extrusion est préférentiellement choisie, en lien avec le temps de séjour du mélange en son intérieur, de sorte que la réaction de réticulation de l'agent réticulant et de la lignine débute et ait partiellement lieu dans la tête d'extrusion, mais qu'elle n'y soit pas totale.

Tout dispositif classique en lui-même pour l'homme du métier peut être mis en oeuvre pour la réalisation de cette étape.

A titre d'exemple, lorsque le matériel utilisé pour la réalisation de cette étape b/ est un dispositif d'extrusion comportant une trémie d'alimentation, un moyen de convoyage et une filière d'extrusion, les températures au niveau de ces différentes zones peuvent être choisies comme suit :
- température de la zone d'alimentation comprise entre 50 et 180 °C, de préférence 80 et 150 °C, et préférentiellement 100 et 130°C ;
- température de la zone de convoyage comprise entre 60 et 180 °C, de préférence 90 et 160 °C, et préférentiellement 110 et 140 °C ;
- et température de la tête d'extrusion comprise entre 100 et 250 °C, de préférence 150 et 200 °C.

Les paramètres opératoires sont en outre choisis de manière classique en elle-même pour l'homme du métier.

La vitesse de rotation de la vis d'extrusion est notamment comprise entre 10 et 300 tours/minute.

Le temps de séjour de la matière dans le dispositif d'extrusion est variable. Il est de préférence supérieur à 5 minutes.

Au cours de cette étape, le mélange fluide est de préférence directement extrudé à travers la tête d'extrusion en sortie de vis. Il est alors étiré pendant son refroidissement, par exemple dans l'air ambiant ou dans un bain d'eau.

Il convient de noter qu'au cours de cette étape, l'agent réticulant peut non seulement réagir avec la lignine, mais également avec l'agent plastifiant, en fonction des caractéristiques de ces composés et des conditions opératoires mises en oeuvre.

Les fils à base de lignine ainsi obtenus présentent des propriétés physico-chimiques permettant de former, par étirage de ces fils, des fibres de très grande longueur, de plusieurs centaines, voire plusieurs milliers, de mètres.

L'étape c/ d'étirage des fils peut être réalisée selon toute méthode et au moyen de tout appareillage connus de l'homme du métier pour la réalisation d'une telle opération. Elle peut notamment être réalisée à une température provoquant un ramollissement du matériau constituant les fils. A cet effet, les fils défilent successivement dans un banc de rouleaux dits d'alimentation, à travers un four porté à ladite température, puis dans un banc de rouleaux dits d'étirage. Ils subissent un étirage entre les deux bancs de rouleaux, selon le rapport des vitesses de rotation des rouleaux d'alimentation et des rouleaux d'étirage. Ils peuvent autrement être étirés sur des rouleaux chauffants tournant à différentes vitesses.

Un tel étirage permet avantageusement d'aligner les chaines polymères le long de l'axe des fibres.

Les fibres peuvent éventuellement être traitées en sortie de filage, par des traitements par rayonnements, tels que des rayons gamma, des rayons beta, des faisceaux d'électrons, des rayons UV.

En dernière étape, la fibre à base de lignine obtenue, qui peut présenter une longueur importante, peut être mise en bobine, par exemple sur un tube en carton.

L'ensemble de ces étapes du procédé selon l'invention de préparation de fibres à base de lignine ont été faciles et rapides à mettre en oeuvre, avec une faible consommation d'énergie.

Le procédé de préparation d'une fibre à base de lignine selon l'invention peut comprendre une étape finale de stockage de la fibre à base de lignine à température ambiante, c'est-à-dire à une température d'environ 20 °C, et plus largement comprise entre 15 et 25 °C. Ce stockage est de préférence pendant une durée supérieure à 1 jour.

Une telle étape s'avère particulièrement avantageuse dans les modes de mise en oeuvre dans lesquels l'agent réticulant est apte à réticuler avec la lignine à température ambiante. Elle permet en effet alors à la réaction de réticulation de l'agent réticulant et de la lignine, qui a été initiée dans le dispositif d'extrusion lors de l'étape b/ de filage du procédé selon l'invention, de se poursuivre, voire de s'achever. Une durée de stockage à température ambiante de quelques jours est notamment particulièrement préférée à cet effet dans le cadre de l'invention.

L'invention n'exclut pas pour autant un stockage de la fibre à base de lignine à plus basse température, par exemple à une température comprise entre -15 et 15 °C, par exemple entre 5 et 15 °C.

Le procédé de préparation d'une fibre à base de lignine selon l'invention peut en outre comprendre, en remplacement de cette étape finale de stockage, ou en complément de cette dernière, juste avant ou après celle-ci, une étape de traitement thermique de la fibre à base de lignine de courte durée, par exemple de quelques dizaines de minutes, notamment comprise entre 10 et 60 minutes, par exemple d'environ 30 minutes, visant à permettre l'achèvement de la réaction de réticulation de l'agent réticulant et de la lignine débutée dans le dispositif d'extrusion lors de l'étape b/ de filage selon l'invention. Ce traitement thermique peut être réalisé sous atmosphère oxydative ou non. Il est préférentiellement réalisé à une température inférieure à 350 °C. Dans des modes de mise en oeuvre particuliers de l'invention, il est réalisé à une température comprise entre 180 et 280 °C.

Selon un deuxième aspect, la présente invention concerne une formulation pour la mise en oeuvre d'un procédé de préparation, par la technique de la voie fondue, de fibres à base de lignine, précurseurs de fibres de carbone, selon la présente invention. Cette formulation comprend :
- de la lignine, de préférence de la lignine non chimiquement modifiée,
- un agent plastifiant miscible, généralement à chaud, avec la lignine,
- et un agent réticulant apte à initier une réaction de réticulation avec la lignine en moins de 10 minutes à partir d'une température supérieure d'au moins 10°C à la température de transition vitreuse du mélange intime de la lignine et de l'agent plastifiant. De préférence, l'agent réticulant présente une température de réticulation opérante supérieure d'au moins 10°C à la température de transition vitreuse du mélange intime de ladite lignine et dudit agent plastifiant.

Dans des modes de réalisation particuliers de l'invention, la formulation comprend un agent réticulant apte à initier une réaction de réticulation avec la lignine en moins de 5 minutes, à partir d'une température supérieure d'au moins 10°C à la température de transition vitreuse du mélange intime de la lignine et de l'agent plastifiant.

La formulation selon l'invention, et ses différents composants, peuvent en outre répondre à l'une ou plusieurs des caractéristiques décrites ci-avant en référence au procédé de préparation de fibres à base de lignine selon l'invention.

En particulier, l'agent plastifiant contenu dans la formulation selon l'invention peut être un polymère d'acrylonitrile fusible, comme décrit ci-avant.

Selon un troisième aspect, la présente invention concerne un extrudât à base de lignine susceptible d'être obtenu à l'issue de l'étape a/ de mélange intime des composants de la formulation, et plus particulièrement de la sous-étape a2/, d'un procédé de préparation de fibres à base de lignine selon l'invention. Cet extrudât se présente notamment sous forme de granulés.

Une fibre à base de lignine est obtenue par un procédé selon l'invention, répondant à l'une ou plusieurs des caractéristiques ci-avant.

Cette fibre peut être aussi bien du type mono-filament que du type multi-filaments.

Elle est continue, et peut présenter un diamètre compris entre 1 et 1000 µm, de préférence entre 15 et 30 µm, et une longueur supérieure ou égale à 1 m, plus précisément comprise entre un mètre et plusieurs kilomètres.

La lignine qui la constitue s'y trouve, au moins en partie, sous une forme réticulée avec l'agent réticulant, et ce autant dans le coeur même de la fibre qu'à sa surface, si bien qu'elle présente une tenue mécanique sous élévation de température particulièrement bonne.

Une telle fibre à base de lignine obtenue, en particulier directement, par un procédé de préparation selon l'invention, peut être utilisée pour la fabrication de fibres de carbone.

Plus généralement, dans un procédé de fabrication d'une fibre de carbone, on soumet une fibre à base de lignine obtenue, en particulier directement, par un procédé de préparation selon l'invention tel que décrit ci-avant, à un traitement de carbonisation, puis le cas échéant de graphitisation.

Le traitement de carbonisation peut notamment être réalisé sur la fibre obtenue en sortie de l'étape b/ ou de l'étape c/ du procédé de préparation d'une fibre à base de lignine selon l'invention, sans avoir soumis au préalable cette fibre à un traitement thermo-oxydatif intercalaire.

Ainsi, dans des modes de mise en oeuvre particuliers, la fibre à base de lignine obtenue par un procédé de préparation selon l'invention n'est soumise à aucune étape de traitement thermique, en particulier à haute température, typiquement supérieure ou égale à 150 °C, préalablement à la mise en oeuvre de l'étape de traitement de carbonisation.

La fibre à base de lignine, obtenue en sortie de l'étape b/ ou de l'étape c/ du procédé de préparation d'une fibre à base de lignine selon l'invention, peut notamment être soumise, préalablement à l'étape de traitement de carbonisation, à un traitement par rayonnements de type UV, Gamma, Beta, électronique.

Le procédé de fabrication d'une fibre de carbone peut en outre comprendre, préalablement à l'étape de traitement par carbonisation, une étape de traitement thermique de la fibre à base de lignine de courte durée, par exemple de quelques dizaines de minutes, notamment comprise entre 10 et 60 minutes, par exemple d'environ 30 minutes, visant à permettre l'achèvement de la réaction de réticulation de l'agent réticulant et de la lignine débutée dans le dispositif d'extrusion lors de l'étape b/ de filage selon l'invention. Ce traitement thermique, qui peut avantageusement être réalisé dans le four mis en oeuvre pour le traitement de carbonisation, peut être réalisé sous atmosphère oxydative ou non. Il est préférentiellement réalisé à une température inférieure à 350 °C. Dans des modes de mise en oeuvre particuliers, il est réalisé à une température comprise entre 180 et 280 °C. La pression appliquée dans le four est de préférence comprise entre la pression atmosphérique, et 10 bars au-delà de la pression atmosphérique.

Dans des modes de mise en oeuvre particuliers, le procédé de fabrication d'une fibre de carbone comprend, avant la réalisation de l'étape de traitement par carbonisation, une étape de stockage de la fibre à base de lignine, par exemple sous forme de bobine, à température ambiante, c'est-à-dire à une température d'environ 20 °C, ou plus largement comprise entre 15 et 25 °C. Si l'agent réticulant mis en oeuvre le permet, cette étape de stockage est de préférence réalisée pendant une durée suffisante pour permettre à la réaction de réticulation de l'agent réticulant et de la lignine, qui a été initiée dans la tête d'extrusion du dispositif d'extrusion, de se poursuivre. La stabilité des fibres à base de lignine est alors avantageusement d'autant plus importante. L'étape de stockage de la fibre à base de lignine peut plus généralement être réalisée à une température comprise entre -15 et 25°C.

Le traitement de carbonisation de la fibre à base de lignine peut quant à lui être mis en oeuvre selon toute méthode classique en elle-même pour l'homme du métier.

Il peut être réalisé en continu, la fibre défilant dans le four de carbonisation, ou en discontinu, c'est-à-dire en mode statique, la fibre étant de préférence maintenue sous tension dans le four.

Préalablement à la carbonisation, la fibre peut être imprégnée par un agent aidant à la carbonisation, tel qu'un siloxane.

Dans des modes de mise en oeuvre particuliers, le four de carbonisation est hermétiquement fermé et mis sous vide jusqu'à une valeur inférieure à 1.10⁴ Pa (0,1 bar). Il est ensuite rempli d'un gaz inerte, tel que de l'azote, de l'argon, etc., et une fuite de gaz est créée de manière à ce que le débit de gaz soit compris entre 50 et 500 renouvellements de volume par heure. La pression dans le four est de préférence comprise entre 1.10³ Pa et 5.10⁴ Pa au-dessus de la pression atmosphérique. La température appliquée dans le four de carbonisation est de préférence comprise entre 800°C et 1500°C.

On obtient, à l'issue de ce traitement de carbonisation, une fibre de carbone.

Cette fibre de carbone peut ensuite être soumise, le cas échéant, à un traitement de graphitisation, par chauffage jusqu'à une température de 2500°C sous gaz inerte, de sorte à obtenir une meilleure structuration du carbone, et de ce fait des propriétés mécaniques plus avantageuses.

La fibre à base de lignine obtenue selon l'invention peut autrement être carbonisée en continu, en la faisant défiler successivement dans différents fours, dont un four de carbonisation sous atmosphère inerte à une température comprise entre 800°C et 1500°C, puis un four de graphitisation à une température pouvant aller jusqu'à 2500°C. La vitesse de défilement de la fibre dans ces fours est alors préférentiellement comprise entre 1 et 100 m/h.

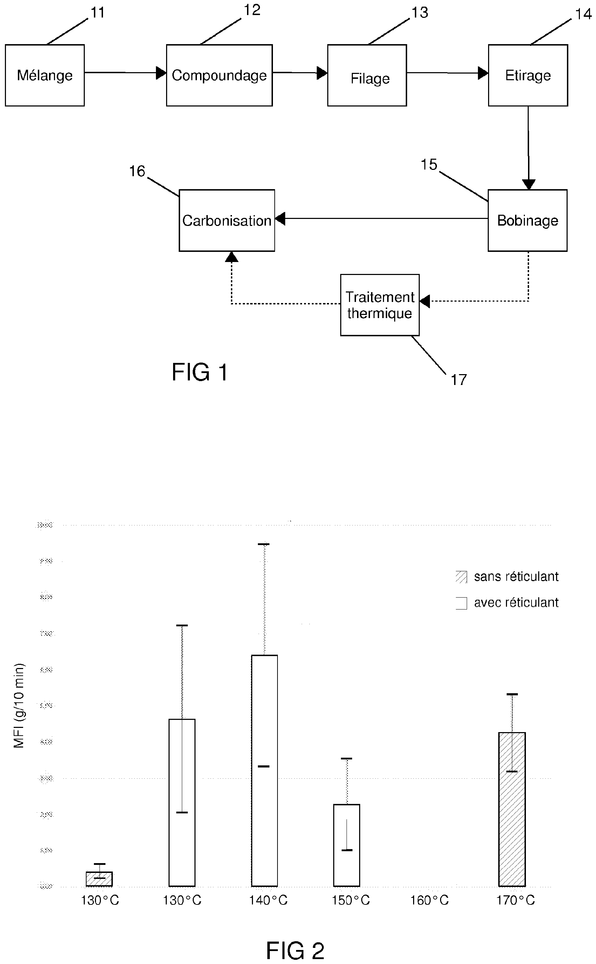

Les caractéristiques et avantages de l'invention apparaîtront plus clairement à la lumière des exemples de mise en oeuvre ci-après, fournis à simple titre illustratif et nullement limitatifs de l'invention, avec l'appui des figures 1 à 9, dans lesquelles :
- la figure 1 illustre de manière schématique, sous forme d'un diagramme à blocs, les différentes étapes d'un procédé de fabrication d'une fibre de carbone selon l'invention ;
- la figure 2 montre un graphe en barres illustrant l'indice de fluidité à chaud (MFI) mesuré à différentes températures, pour des granulés obtenus en première étape d'un procédé selon l'invention (« avec réticulant ») et pour des granulés obtenus par un procédé similaire, mais ne mettant pas en oeuvre d'agent réticulant (« sans réticulant ») ;

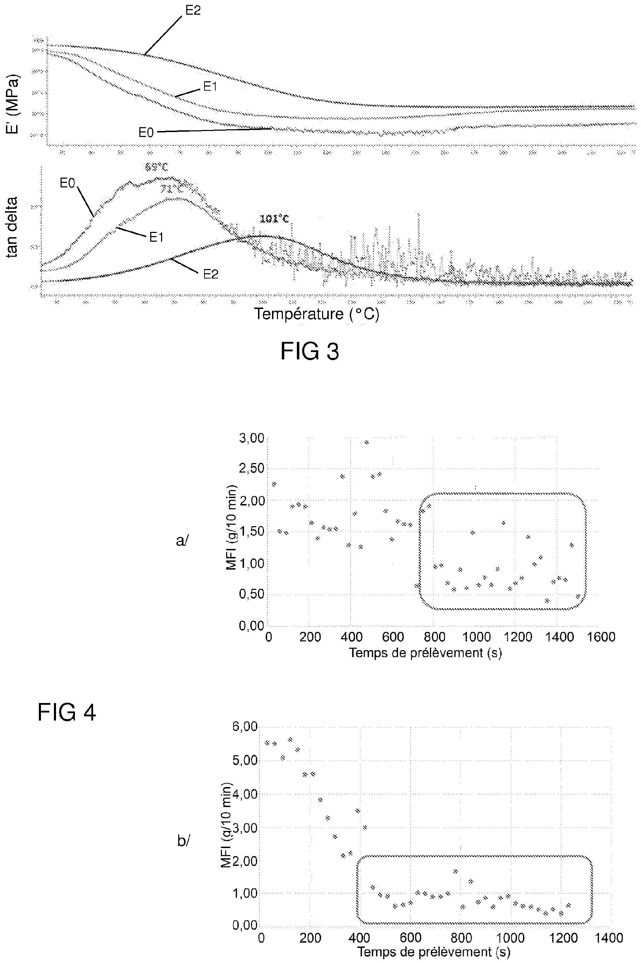

- la figure 3 montre un graphe représentant, en fonction de la température, le facteur de perte (tan delta) et le module de conservation (E') mesurés par analyse mécanique dynamique pour un échantillon de granulés obtenus en première étape d'un procédé de préparation de fibres à base de lignine selon l'invention : sans traitement thermique supplémentaire (E0), avec un traitement thermique de 130 °C pendant 5 min (E1) ou un traitement thermique de 130 °C pendant 5 min, puis de 20°C jusqu'à 220 °C pendant 100 min (E2) ;
- la figure 4 montre des graphes illustrant l'évolution de l'indice de fluidité à chaud (MFI) mesuré respectivement à a/ 160 °C, b/ 130 °C, en fonction du temps de prélèvement, pour des granulés obtenus en première étape d'un procédé selon l'invention ; sur chacun de ces graphes la zone de référence pour le calcul du MFI est indiquée par un encadrement ;

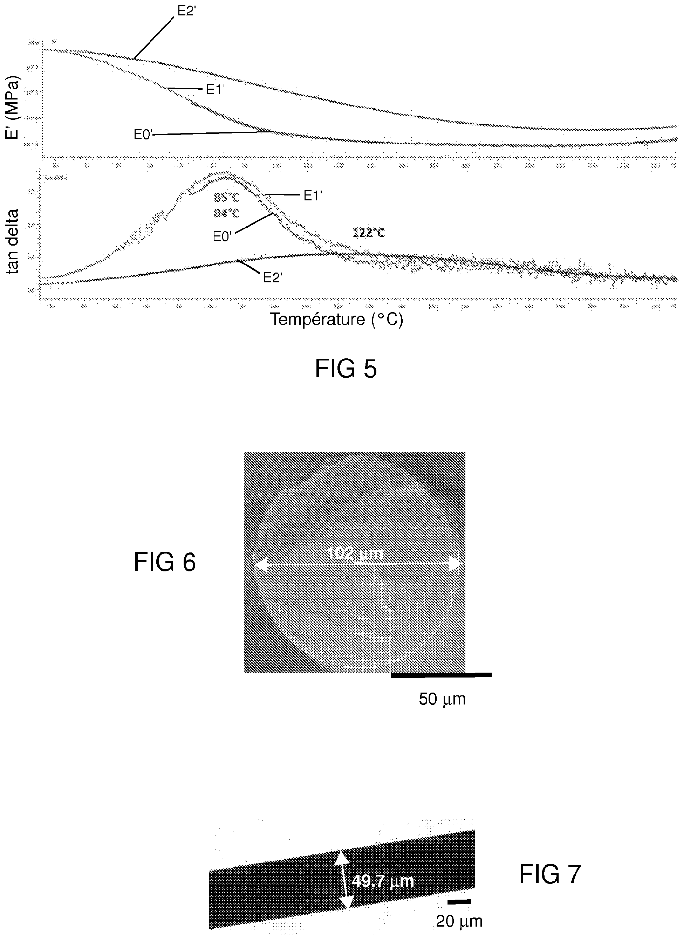

- la figure 5 montre un graphe représentant, en fonction de la température, le facteur de perte (tan delta) et le module de conservation (E') mesurés par analyse mécanique dynamique pour un échantillon de granulés obtenus en première étape d'un procédé selon l'invention : sans traitement thermique supplémentaire (E0'), avec un traitement thermique de 130 °C pendant 5 min (E1') ou un traitement thermique de 130 °C pendant 5 min puis de 20 °C jusqu'à 220 °C pendant 100 min (E2') ;
- la figure 6 montre une image de microscopie électronique à balayage d'une fibre à base de lignine obtenue par un procédé conforme à l'invention ;
- la figure 7 montre une image de microscopie optique d'une fibre de carbone obtenue par carbonisation directe de la fibre à base de lignine de la figure 5, par un procédé de fabrication de fibres de carbone conforme à l'invention ;

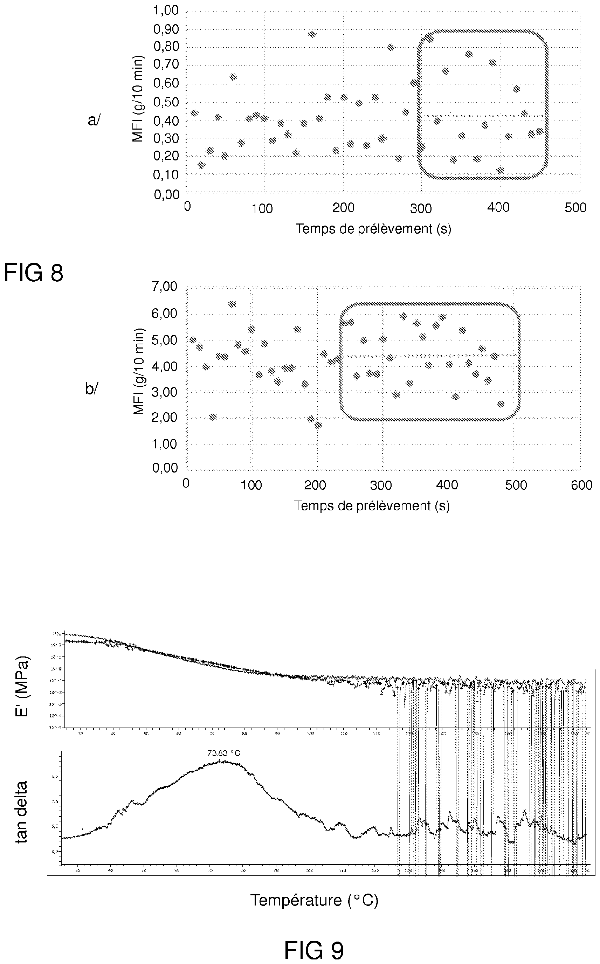

- la figure 8 montre des graphes illustrant l'évolution de l'indice de fluidité à chaud (MFI) mesuré respectivement à a/ 130 °C, b/ 170 °C, en fonction du temps de prélèvement, pour des granulés obtenus en première étape d'un procédé similaire au procédé selon l'invention ne mettant pas en oeuvre d'agent réticulant ; sur chacun de ces graphes la zone de référence pour le calcul du MFI est indiquée par un encadrement ;
- et la figure 9 montre un graphe représentant, en fonction de la température, le facteur de perte (tan delta) et le module de conservation (E') mesurés par analyse mécanique dynamique pour un échantillon de granulés obtenus en première étape d'un procédé similaire au procédé selon l'invention ne mettant pas en oeuvre d'agent réticulant, sans traitement thermique supplémentaire.

Les différentes étapes d'un procédé de fabrication d'une fibre de carbone selon un mode de mise en oeuvre de l'invention sont illustrées de manière schématique sur la figure 1, sous forme d'un diagramme à blocs.

Ce procédé comprend tout d'abord la fabrication d'une fibre à base de lignine, conformément à la présente invention.

En première étape a1/, illustrée en 11 sur la figure, il comprend le mélange de lignine, d'un agent plastifiant miscible à chaud avec la lignine et d'un agent réticulant apte à réticuler avec la lignine, plus précisément à initier une réaction de réticulation avec la lignine, en quelques minutes à une température qui est supérieure d'au moins 10 °C à la température de transition vitreuse du mélange intime de la lignine et de l'agent plastifiant.

L'étape suivante a2/ du procédé, illustrée en 12 sur la figure, consiste à réaliser le mélange intime des composants ci-dessus, par la technique dite de compoundage, à une température supérieure à la température de transition vitreuse de la lignine et à la température de ramollissement, notamment de fusion lorsqu'il s'agit d'un matériau cristallin ou semi-cristallin, de l'agent plastifiant. A l'issue de cette étape, on obtient un extrudât, notamment sous forme de granulés, dans lequel la lignine, l'agent plastifiant et l'agent réticulant se trouvent en mélange intime. Aucune réaction de réticulation n'a encore débuté à ce stade du procédé.

L'étape a1/ et l'étape a2/ peuvent être réalisées successivement ou simultanément, au moins pour certaines des opérations qu'elles requièrent.

L'étape suivante du procédé de préparation d'une fibre à base de lignine selon un mode de mise en oeuvre particulier de l'invention, illustrée en 13 sur la figure, consiste en une étape de filage b/ de l'extrudât obtenu, dans un dispositif d'extrusion comportant une tête d'extrusion en partie terminale, pour former des fils continus. A cet effet, il est appliqué des conditions opératoires de température et de temps de séjour dans le dispositif, qui sont telles que la température appliquée dans le dispositif d'extrusion est supérieure à la température de transition vitreuse du mélange intime formé dans l'étape a2/, si bien que ce mélange se trouve sous forme fluide ; et la réticulation de l'agent réticulant et de la lignine est provoquée en partie terminale du dispositif d'extrusion, dans la tête d'extrusion, et uniquement dans cette partie terminale.

On obtient, en sortie du dispositif d'extrusion, une fibre à base de lignine, qui est soumise, le cas échéant, à une étape c/ d'étirage, illustrée en 14 sur la figure, classique en elle-même.

La fibre à base de lignine obtenue est ensuite soumise à une étape de bobinage, illustrée en 15 sur la figure.

Le procédé de fabrication d'une fibre de carbone selon l'invention comprend alors une étape de carbonisation de la fibre à base de lignine, illustrée en 16 sur la figure, et classique en elle-même.

Eventuellement, il peut comporter une étape intermédiaire, illustrée en 17 sur la figure 1, de traitement thermique de la fibre à base de lignine en bobine, visant à augmenter sa stabilité par progression de la réaction de réticulation de l'agent réticulant et de la lignine, à une température inférieure à 350 °C et pendant une durée n'excédant pas quelques dizaines de minutes.

### Exemple 1

### 1/ Formulation

La formulation conforme à l'invention mise en oeuvre dans cet exemple contient les teneurs en constituants suivantes, exprimées en pourcentage en poids, par rapport au poids total de la formulation :
- 76 % de lignine Protobind 2400 commercialisée par la société GreenValue,
- 20 % de polymère d'oxyde de polyéthylène commercialisé sous le nom Alkox^{®} E30 par la société Meisei Chemical Works, de masse molaire moyenne en nombre comprise entre 300 000 et 400 000 g/mol et de masse molaire moyenne en masse comprise entre 400 000 et 550 000 g/mol (agent plastifiant),
- et 4 % de diglycidyléther de bisphénol A, composé époxy commercialisé sous la dénomination Epolam 8056 R par la société Axson (agent réticulant).

Les propriétés de l'agent plastifiant sont les suivantes : température de transition vitreuse Tg = -50 / -60 °C, température de fusion Tf = 55 - 60 °C, température de cristallisation Tc = 30 - 40 °C.

Les propriétés de l'agent réticulant sont les suivantes : température de transition vitreuse Tg = -20 °C, masse molaire inférieure à 700 g/mol.

La température de transition vitreuse de cette formulation, mesurée par DMA suivant le protocole exposé ci-avant, est de 62 °C. Sa température de réticulation opérante est supérieure à 120 °C.

### 2/ Procédé de préparation de fibres de lignine

A partir de ces ingrédients, il est mis en oeuvre le procédé de fabrication de fibres de lignine conforme à l'invention suivant.

### Compoundage

La lignine et l'agent plastifiant sont mélangés en étape préalable par action mécanique. Un doseur à vis sans fin est utilisé pour déverser ce mélange dans la trémie d'alimentation d'une extrudeuse qui n'est pas chauffée.

L'extrudeuse mise en oeuvre est une extrudeuse bi-vis à vis corotatives Eurolab de Thermo Scientific. Les paramètres opératoires sont les suivants :
- Diamètre de vis = 16 mm
- Rapport L/D : 40
- Vitesse de vis = 250 rpm

Il n'est mis en oeuvre aucun dégazage pendant l'extrusion.

Les températures des différentes zones de l'extrudeuse sont les suivantes :
- Température de la zone d'alimentation : 60°C
- Température des zones de malaxage : 100 °C et 120 °C
- Température des zones de convoyage : 120 °C et 135°C
- Température de la filière : 130°C

La température de filière d'extrusion est de 30°C inférieure à la température de réticulation opérante de l'agent réticulant avec la lignine.

L'agent réticulant, qui se trouve sous forme liquide, est injecté à l'aide d'un pousse-seringue dans l'avant-dernière zone de chauffe (c'est-à-dire au niveau de la zone à 135°C). Il ne passe donc que peu de temps dans l'extrudeuse, ce qui permet d'éviter d'activer la réaction de réticulation avec la lignine.

On obtient en sortie de filière un jonc souple et étirable. Le temps de séjour total de la lignine dans l'extrudeuse a été inférieur à 5 min.

Ce jonc est refroidi à l'air avant d'être granulé.

### Analyse des granulés obtenus

Les granulés ainsi obtenus sont analysés pour déterminer leur indice de fluidité à chaud (MFI, pour l'anglais Melt Flow Index) à différentes températures. Cette analyse consiste à mesurer la masse de matière traversant une filière donnée sous l'action d'une pression fixée, pendant un temps donné et à une température fixée. Plus le matériau est fluide, et plus la quantité de matière sortant de la filière pendant ce temps donné est importante.

Les conditions d'analyse sont les suivantes. Les températures testées sont 130, 140, 150, 160 et 170 °C. Une fois le fourreau à la température souhaitée, 5 g de matière sont insérés dans la trémie du dispositif de mesure de MFI. Afin que cette quantité soit vraiment à la température souhaitée, elle subit un temps de préchauffage de 5 min sous un poids de 2,16 Kg, puis un prélèvement est effectué toutes les 10 secondes.

A titre comparatif, est mis en oeuvre le même protocole de mesure, pour des granulés obtenus comme indiqué précédemment, mais sans addition d'agent réticulant.

Les résultats obtenus sont montrés sur la figure 2.

Pour les granulés comparatifs sans réticulant (barres hachurées sur le graphe), on constate que plus la température est élevée, plus l'indice MFI est important.

Pour les granulés obtenus conformément à l'invention (barres blanches sur le graphe) : à 130°C, le MFI est faible, mais plus élevé que pour les granulés obtenus sans réticulant. A 130°C, le réticulant non réagi fait office de plastifiant et fluidifie le mélange. Après 6 minutes d'écoulement sous chauffage, on observe une prise en masse due à la réticulation (le réticulant a bien joué son rôle et a entièrement réticulé la formulation : il ne se produit plus aucun écoulement). A 140°C, le MFI est un peu plus élevé. La viscosité du mélange non réagi est plus basse, car la température est plus élevée Une prise en masse a cependant lieu plus rapidement, après 3 minutes d'écoulement sous chauffage. La cinétique de la réaction est accélérée car la température est plus élevée. A 150°C, on constate que le MFI a chuté, et la prise en masse a lieu au bout de seulement 2 minutes d'écoulement sous chauffage. Ceci indique que la réticulation a commencé pendant le temps de préchauffage. Finalement, à 160°C, il n'y a aucun écoulement au bout de 5 minutes, la prise en masse a donc eu lieu durant le temps de préchauffage.

Ainsi, ceci démontre que l'agent réticulant réagit après un certain temps et réticule le mélange, faisant augmenter la viscosité et chuter le MFI ; en outre, le temps nécessaire à la réaction diminue lorsque la température augmente.

Les granulés sont en outre analysés par analyse mécanique dynamique (DMA) pour mesurer leurs propriétés viscoélastiques et mécaniques en fonction de la température. A cet effet, à l'issue de l'étape de compoundage, ils sont soumis à des traitements thermiques supplémentaires permettant de simuler le comportement de la matière lors des étapes subséquentes du procédé (filage, puis traitement thermique supplémentaire optionnel) : traitement thermique à 130 °C pendant 5 min ; traitement thermique à 130 °C pendant 5 min puis deuxième passage de 20 à 220°C pendant 100 min. A titre comparatif, un échantillon obtenu directement à l'issue du compoundage est également analysé.

Il est mis en oeuvre un dispositif DMA 1 de Mettler Toledo. Les paramètres opératoires sont les suivants :
- Type de sollicitation : tension
- Echantillon sollicité : parallélépipède ; L=5mm ; I=2mm ; e=0,8mm
- Rampe de température : 2°C/min
- Fréquence : 1Hz
- Déplacement : 2µm

Le déplacement est choisi de façon à obtenir un signal tout en restant dans le domaine viscoélastique linéaire.

Les résultats obtenus sont montrés sur la figure 3.

On y observe que l'échantillon tel qu'obtenu après le compoundage (E0) flue après la transition vitreuse, si bien qu'il est adapté pour un filage ultérieur. L'échantillon chauffé à 130°C pendant 5 min (E1) présente une transition vitreuse légèrement décalée, et le matériau ne flue pas après cette dernière ; après la transition vitreuse, le module de conservation E' est de 5 à 10 fois supérieur à celui de l'échantillon E0. Le matériau a commencé à réticuler. La réticulation n'est pas terminée, puisqu'une remontée de E' est observée entre 130 °C et 220 °C. Ce résultat confirme qu'il sera possible d'effectuer l'étape suivante du procédé selon l'invention à une température supérieure ou égale à 130°C pour démarrer l'étape de réticulation. Pour l'échantillon ayant subi le premier balayage de température et un balayage de température subséquent entre 20 et 220 °C (E2), la transition vitreuse est fortement décalée vers les hautes températures et après cette transition, E' reste 10 fois supérieur à celui de E0. Le matériau est complètement réticulé et ne flue pas. E' atteint par E1 à 220°C est très proche de E' atteint par E2. Ce résultat montre l'importance de la température de la filière dans l'étape suivante : une filière trop chaude mène à une réticulation complète et à une obstruction de la tête d'extrusion par la matière.

### Filage

Les granulés obtenus à l'issue de l'étape de compoundage sont soumis à une étape de filage par extrusion à chaud puis étirage des fibres, de la façon suivante.

Il est mis en oeuvre une extrudeuse horizontale de table monovis Scamex de type Rheoscam avec un rapport L/D = 11, à 3 zones de chauffe. La troisième zone de chauffe permet de contrôler la température de la tête d'extrusion, et est réglée pour amorcer la réticulation.

Les températures utilisées sont plus précisément les suivantes :
- Température de la zone d'alimentation : 120 °C
- Température de la zone de convoyage : 140 °C
- Température de la tête d'extrusion : 180 °C

Les granulés sont introduits dans l'extrudeuse, et le mélange fondu est directement extrudé à travers la tête d'extrusion en sortie de vis, pour former un fil, qui est étiré tout en étant refroidi dans l'air ambiant.

Le fil rejoint ensuite un banc de rouleaux d'alimentation, de vitesse 20 m/min, passe à travers un four à la température de 160°C, puis sur un banc de rouleaux d'étirage, de vitesse 40 m/min. Il subit un étirage entre les deux bancs de rouleaux, selon le rapport des vitesses de rotation des rouleaux d'alimentation et des rouleaux d'étirage. En dernière étape, la fibre de lignine obtenue est bobinée sur un tube en carton.

Cette fibre se présente sous forme de monofilament. Elle présente un diamètre d'environ 20 µm. Sa longueur est d'environ 1 000 mètres.

Cette fibre de lignine peut être directement soumise à une étape de carbonisation, pour former une fibre de carbone, sans subir une quelconque étape de traitement thermique oxydatif intermédiaire.

A titre d'exemple, elle peut à cet effet être soumise à une carbonisation statique sous azote et sous tension avec une rampe de température de 20 à 1200°C à 3°C/min, de manière classique en elle-même. La fibre de carbone alors obtenue se présente sous forme de monofilament, et présente un diamètre d'environ 10 µm.

### Exemple 2

### 1/ Formulation

La formulation conforme à l'invention mise en oeuvre dans cet exemple contient les teneurs en constituants suivantes, exprimées en pourcentage en poids, par rapport au poids total de la formulation :
- 75 % de lignine Protobind 2400,
- 20 % de polymère d'oxyde de polyéthylène commercialisé sous le nom Alkox^{®} E30 (agent plastifiant),
- et 5 % de bisphénol F bisbenzoxazine commercialisée sous la dénomination Araldite^{®} MT 35700 par la société Huntsman (agent réticulant).

Les propriétés de l'agent plastifiant sont les suivantes : température de transition vitreuse Tg = -50 / -60 °C, température de fusion Tf = 55 - 60 °C, température de cristallisation Tc = 30 - 40 °C.

Les propriétés de l'agent réticulant sont les suivantes : température de transition vitreuse Tg = 73,6 °C, température de fusion Tf = 240 °C.

La température de transition vitreuse de cette formulation, mesurée par DMA suivant le protocole exposé ci-avant, est de 65 °C. Sa température de réticulation opérante est supérieure à 180 °C.

### 2/ Procédé de préparation de fibres de lignine

A partir de ces ingrédients, il est mis en oeuvre le procédé de fabrication de fibres de lignine conforme à l'invention tel que décrit ci-avant dans l'exemple 1, à l'exception des paramètres opératoires suivants.

### Compoundage

Les températures des différentes zones de l'extrudeuse sont les suivantes :
- Température de la zone d'alimentation : 60°C
- Température des zones de malaxage : 100 °C et 130 °C
- Température des zones de convoyage : 130 °C et 130°C
- Température de la filière : 130°C

La vitesse de vis est de 150 rpm.

L'agent réticulant utilisé commence à réticuler avec la lignine vers 200°C. Les températures d'extrusion étant plus basses que sa température d'activation, il joue le rôle de charge dans la formulation. Le jonc en sortie de filière est souple et étirable. Il est refroidi à l'air avant d'être granulé.

### Analyse des granulés obtenus

Les granulés ainsi obtenus sont analysés pour déterminer leur indice de fluidité à chaud MFI à différentes températures. Le protocole mis en oeuvre est le même que celui exposé dans l'Exemple 1 ci-avant.

Les températures testées sont 160 et 190 °C.

Les résultats obtenus sont montrés sur la figure 4.

On calcule, pour l'échantillon traité à 160°C (graphe a/), pour la zone de référence indiquée par un encadré sur la figure, un indice de fluidité à chaud MFI = 0,94 ± 0,41 g/10min. Pour l'échantillon traité à 130 °C (graphe b/), pour la zone de référence indiquée par un encadré sur la figure, un indice de fluidité à chaud MFI = 0,82 ± 0,29 g/10min.

Ces résultats obtenus à 160 et 190°C sont explicites : le MFI diminue au cours du temps pour chaque température. Cela signifie que l'agent réticulant commence à agir. Dans l'étape suivante de filage, la réticulation dans la dernière zone de l'extrudeuse pourra être opérée, et ce afin d'obtenir une fibre à base de lignine ne nécessitant pas d'étape de thermo-oxydation ultérieure.

Les granulés sont en outre analysés par analyse mécanique dynamique (DMA), selon le protocole indiqué dans l'exemple 1 ci-avant.

Les résultats obtenus sont montrés sur la figure 5.

On y observe que l"échantillon tel qu'obtenu après le compoundage (E0') flue après la transition vitreuse, et convient donc pour l'étape suivante du procédé selon l'invention. L'échantillon traité à 130°C pendant 5 min (E1') a exactement le même comportement : la réticulation n'a pas eu lieu. Dans les deux cas, on note une remontée de E' vers 190°C, montrant un début de réticulation. Le résultat obtenu pour l'échantillon ayant subi un traitement thermique supplémentaire de 20°C à 220°C (E2') confirme que la réticulation a eu lieu : la transition vitreuse a lieu à plus haute température, et E' après cette transition est 10 fois plus élevé que dans les cas précédents, il y a encore du signal : le matériau n'a pas flué.

Ceci confirme que la réticulation débute vers 190°C.

### Filage

Les granulés obtenus à l'issue de l'étape de compoundage sont soumis à une étape de filage par extrusion à chaud puis étirage des fibres, selon le protocole décrit dans l'exemple 1 ci-avant.

Les températures des différentes zones de l'extrudeuse sont les suivantes :
- Température de la zone d'alimentation : 130 °C
- Température de la zone de convoyage : 180°C
- Température de la tête d'extrusion : 200 °C

On obtient une fibre de lignine de longueur d'environ 500 m et de diamètre d'environ 100 µm. Une image de microscopie électronique à balayage de cette fibre à base de lignine est montrée sur la figure 6.

### 3/ Procédé de préparation de fibres de carbone

Cette fibre de lignine est directement soumise à une étape de carbonisation, pour former une fibre de carbone, sans subir au préalable une quelconque étape de traitement thermique oxydatif.

Cette étape est réalisée par carbonisation statique sous azote et sous tension, avec une rampe de température de 20 à 1200°C à 3°C/min, de manière classique en elle-même. La fibre de carbone obtenue se présente sous forme de monofilament continu d'une longueur d'environ 20 cm, et présente un diamètre d'environ 50 µm.

Une image de microscopie optique de cette fibre de carbone est montrée sur la figure 7.

### Exemple 3

### 1/ Formulation

La formulation conforme à l'invention mise en oeuvre dans cet exemple contient les teneurs en constituants suivantes, exprimées en pourcentage en poids, par rapport au poids total de la formulation :
- 72 % de lignine Protobind 2400 commercialisée par la société GreenValue,
- 18 % de polymère de polycarboxylate éther commercialisé sous le nom Ethacryl^{®} HF par la société Coatex, de masse molaire moyenne en masse comprise entre 100 000 et 150 000 g/mol (agent plastifiant),
- et 10 % de diglycidyléther de bisphénol A, composé époxy commercialisé sous la dénomination Epolam 8056 R par la société Axson (agent réticulant).

Les propriétés de l'agent plastifiant sont les suivantes : température de transition vitreuse Tg = -45 / -60 °C, température de fusion Tf = 35 - 45 °C, température de cristallisation Tc = 0 - 15 °C.

La température de transition vitreuse de cette formulation, mesurée par DMA suivant le protocole exposé ci-avant, est de 55 °C. La température de réticulation opérante de l'agent réticulant avec la lignine est supérieure à 130 °C.

### 2/ Procédé de préparation de fibres de lignine

A partir de ces ingrédients, il est mis en oeuvre le procédé de fabrication de fibres de lignine conforme à l'invention suivant.

### Compoundage

Un doseur à vis sans fin est utilisé pour déverser la lignine dans la trémie d'alimentation d'une extrudeuse qui n'est pas chauffée. L'Ethacryl^{®} HF est injecté dans cette même trémie d'alimentation grâce à une pompe péristaltique, tandis que l'agent réticulant n'est injecté que dans l'avantdernière zone de chauffe avant la filière, à l'aide d'une pompe de seringue. Il ne passe donc que peu de temps dans l'extrudeuse, ce qui permet d'éviter d'activer la réaction de réticulation avec la lignine.

L'extrudeuse mise en oeuvre est une extrudeuse bi-vis à vis corotatives LTE 26-40 de Labtech Engineering Company LTD. Les paramètres opératoires sont les suivants :
- Diamètre de vis = 26 mm
- Rapport L/D : 40
- Vitesse de vis = 190 rpm

Il est mis en oeuvre 3 ouvertures de dégazage pendant l'extrusion.

Les températures des différentes zones de l'extrudeuse sont les suivantes :
- Température de la zone d'alimentation : 80 °C
- Température des zones de malaxage : 120 °C
- Température des zones de convoyage : 120 °C
- Température de la filière : 120°C

La température de filière d'extrusion est de 10°C inférieure à la température de réticulation opérante de l'agent réticulant avec la lignine.

On obtient en sortie de filière un jonc souple et étirable. Le temps de séjour total de la lignine dans l'extrudeuse a été inférieur à 1 min.

Ce jonc est refroidi à l'air avant d'être granulé.

### Filage

Les granulés obtenus à l'issue de l'étape de compoundage sont soumis à une étape de filage par extrusion à chaud puis étirage des fibres, de la façon suivante. Le protocole opératoire est tel que décrit à l'exemple 1, à l'exception des températures de l'extrudeuse, qui sont les suivantes :
- Température de la zone d'alimentation : 130 °C
- Température de la zone de convoyage : 130°C
- Température de la tête d'extrusion : 140 °C

Le fil obtenu à l'issue de l'étape d'extrusion rejoint ensuite un banc de rouleaux d'alimentation, de vitesse 27 m/min, passe à travers un four à la température de 100°C, puis sur un banc de rouleaux d'étirage, de vitesse 81 m/min.

En dernière étape, la fibre de lignine obtenue est bobinée sur un tube en carton.

Cette fibre se présente sous forme de monofilament. Elle présente un diamètre d'environ 30 µm. Sa longueur est d'environ 500 mètres.

Cette fibre de lignine peut être directement soumise à une étape de carbonisation, pour former une fibre de carbone, sans subir une quelconque étape de traitement thermique oxydatif intermédiaire.

A titre d'exemple, elle peut à cet effet être soumise à une carbonisation statique sous azote et sous tension avec une rampe de température de 20 à 1200°C à 3°C/min, de manière classique en elle-même. La fibre de carbone alors obtenue se présente sous forme de monofilament, et présente un diamètre d'environ 15 µm.

### Exemple 4

### 1/ Formulation

La formulation conforme à l'invention mise en oeuvre dans cet exemple contient les teneurs en constituants suivantes, exprimées en pourcentage en poids, par rapport au poids total de la formulation :
- 63 % de lignine Protobind 2400 commercialisée par la société GreenValue,
- 27 % de copolymère poly(acrylonitrile-co-acrylate de méthyle)-block-poly(acrylonitrile-co-butadiène) commercialisé sous la dénomination Barex^{®} 210E.
- et 10 % de bisphénol F bisbenzoxazine commercialisée sous la dénomination Araldite^{®} MT 35700 par la société Huntsman (agent réticulant).

Les propriétés de l'agent plastifiant sont les suivantes : température de transition vitreuse 1 Tg1 = 66 °C, température de transition vitreuse 2 Tg2 = 131 °C.

La température de transition vitreuse de cette formulation est de 85 °C. La température de réticulation opérante de l'agent réticulant avec la lignine est supérieure à 180 °C.

### 2/ Procédé de préparation de fibres de lignine

A partir de ces ingrédients, il est mis en oeuvre le procédé de fabrication de fibres de lignine conforme à l'invention suivant.

### Compoundage

La lignine et l'agent plastifiant sont mélangés en étape préalable par action mécanique. Un doseur à vis sans fin est utilisé pour déverser ce mélange dans la trémie d'alimentation d'une extrudeuse qui n'est pas chauffée.

L'extrudeuse mise en oeuvre est une extrudeuse bi-vis à vis corotatives Eurolab de Thermo Scientific. Les paramètres opératoires sont les suivants :
- Diamètre de vis = 16 mm
- Rapport L/D : 40
- Vitesse de vis = 150 rpm

Il n'est mis en oeuvre aucun dégazage pendant l'extrusion.

Les températures des différentes zones de l'extrudeuse sont les suivantes :
- Température de la zone d'alimentation : 60°C
- Température des zones de malaxage : 100 °C et 150 °C
- Température des zones de convoyage : 150 °C et 150°C
- Température de la filière : 150°C

La température de filière d'extrusion est de 30°C inférieure à la température de réticulation opérante de l'agent réticulant avec la lignine.

On obtient en sortie de filière un jonc souple et étirable. Le temps de séjour total de la lignine dans l'extrudeuse a été inférieur à 5 min.

Ce jonc est refroidi à l'air avant d'être granulé.

### Filage

Les granulés obtenus à l'issue de l'étape de compoundage sont soumis à une étape de filage par extrusion à chaud puis étirage des fibres, de la façon suivante. Le protocole opératoire est tel que décrit à l'exemple 1, à l'exception des températures de l'extrudeuse, qui sont les suivantes :
- Température de la zone d'alimentation : 160 °C
- Température de la zone de convoyage : 165°C
- Température de la tête d'extrusion : 170 °C

Le fil obtenu est bobiné sur un tube en carton. Cette fibre se présente sous forme de monofilament. Elle présente un diamètre d'environ 30 µm. Sa longueur est supérieure à 1 200 m. La fibre obtenue possède une résistance mécanique et une étirabilité accrue par rapport aux fibres obtenues aux exemples 1, 2, et 3 précédents. De ce fait, elle peut avantageusement être bobinée à une vitesse de 630 m/min.

Cette fibre de lignine peut être directement soumise à une étape de carbonisation, pour former une fibre de carbone, sans subir une quelconque étape de traitement thermique oxydatif intermédiaire.

A titre d'exemple, elle peut à cet effet être soumise à une carbonisation statique sous azote et sous tension avec une rampe de température de 20 à 1200°C à 3°C/min, de manière classique en elle-même. La fibre de carbone alors obtenue se présente sous forme de monofilament, et présente un diamètre d'environ 20 µm.

### Exemple 5 - exemple comparatif

A titre comparatif, il est mis en oeuvre un procédé de préparation de fibres à base de lignine similaire au procédé selon l'invention, qui ne met cependant pas en oeuvre d'agent réticulant.

### 1/ Formulation

La formulation mise en oeuvre dans cet exemple contient les teneurs en constituants suivantes, exprimées en pourcentage en poids, par rapport au poids total de la formulation :
- 80 % de lignine Protobind 2400,
- 20 % de polymère d'oxyde de polyéthylène commercialisé sous le nom Alkox^{®} E30 (agent plastifiant),

La température de transition vitreuse de cette formulation, mesurée par DMA selon le protocole exposé ci-avant, est de 74 °C.

### 2/ Procédé de préparation de fibres de lignine

A partir de ces ingrédients, il est mis en oeuvre un procédé de fabrication de fibres de lignine suivant les conditions opératoires décrites ci-avant dans l'exemple 1, à l'exception des paramètres opératoires suivants.

### Compoundage

Les températures des différentes zones de l'extrudeuse sont les suivantes :
- Température de la zone d'alimentation : 60°C
- Température des zones de malaxage : 100 °C et 120 °C
- Température des zones de convoyage : 120 °Cet 130°C
- Température de la filière : 130°C

La vitesse de vis est de 250 rpm.

### Analyse des granulés obtenus

Les granulés ainsi obtenus sont analysés pour déterminer leur indice de fluidité à chaud MFI à différentes températures. Le protocole mis en oeuvre est le même que celui exposé dans l'Exemple 1 ci-avant.

Les températures testées sont 130 et 170°C. Les résultats obtenus sont montrés sur la figure 8, respectivement en a/ et en b/.

On calcule : pour l'échantillon traité à 130°C (graphe a/), pour la zone de référence indiquée par un encadré sur la figure, un indice de fluidité à chaud MFI = 0.42 ± 0.22 g/10 min ; pour l'échantillon traité à 170°C (graphe b/), pour la zone de référence indiquée par un encadré sur la figure, un indice de fluidité à chaud MFI = 4.40 ± 1.07 g/10min.

Ces résultats obtenus à 130 et 170°C sont explicites : le MFI est constant au cours du temps pour une température donnée et le MFI est de plus en plus élevé lorsque la température augmente. Cela signifie que plus la température est élevée, plus le mélange lignine/agent plastifiant est fluide.

Les granulés sont en outre analysés par analyse mécanique dynamique (DMA) selon le protocole indiqué dans l'exemple 1 ci-avant, pour

Les résultats obtenus pour l'analyse de l'échantillon issu du compoundage, sans traitement thermique supplémentaire, sont montrés sur la figure 9.

On y observe que l'échantillon tel qu'obtenu après le compoundage flue après la transition vitreuse (perte du signal), et convient donc pour l'étape suivante du procédé.

L'échantillon traité à 120°C pendant 5 min a exactement le même comportement : la réticulation n'a pas eu lieu. Un deuxième passage à 220°C ne peut être réalisé, l'échantillon ayant flué dans l'appareil.

### Filage

Les granulés obtenus à l'issue de l'étape de compoundage sont soumis à une étape de filage par extrusion à chaud puis étirage des fibres, selon le protocole décrit dans l'exemple 1 ci-avant, avec les paramètres opératoires :
- Température de la zone d'alimentation : 160 °C
- Température de la zone de convoyage : 170°C
- Température de la tête d'extrusion : 180 °C

On obtient une fibre à base de lignine de longueur d'environ 500 m de diamètre environ 100 µm.

### 3/ Procédé de préparation de fibres de carbone

Cette fibre à base de lignine est directement soumise à une étape de carbonisation, sans subir au préalable une quelconque étape de traitement thermique oxydatif.

Cette étape est réalisée par carbonisation statique sous azote et sous tension, avec une rampe de température de 20 à 1200°C à 3°C/min, de manière classique en elle-même. Lors de cette étape, on observe que la fibre fond et flue à une température inférieure à 250°C, et qu'elle rompt dans le four.

Ceci démontre qu'il n'est pas possible de carboniser directement la fibre à base de lignine obtenue en l'absence d'agent réticulant.

## Revendications

1. Procédé de préparation de fibres à base de lignine par la voie fondue, **caractérisé en ce qu'**il comprend :
a/ le mélange intime (11, 12) des composants d'une formulation comprenant :
- de la lignine,
- un agent plastifiant miscible avec ladite lignine,
- et un agent réticulant apte à réticuler avec ladite lignine,
dans des conditions dans lesquelles il ne se produit pas de réticulation de l'agent réticulant et de la lignine,
b/ le filage (13) du mélange intime ainsi obtenu dans un dispositif d'extrusion à chaud comportant une tête d'extrusion en partie terminale, pour former des fils continus, par application dans ledit dispositif d'extrusion de conditions telles que :
- les températures appliquées dans ledit dispositif d'extrusion sont supérieures à la température de transition vitreuse dudit mélange intime,
- et les températures, le temps de séjour dudit mélange intime dans ledit dispositif d'extrusion et le temps de séjour dudit mélange intime dans ladite tête d'extrusion sont tels que la réaction de réticulation de l'agent réticulant et de la lignine est initiée uniquement dans ladite tête d'extrusion,
c/ le cas échéant, l'étirage (14) des fils obtenus pour former des fibres à base de lignine de grande longueur,
l'agent réticulant étant choisi de telle sorte que sa réaction de réticulation avec ladite lignine est initiée en un temps inférieur audit temps de séjour dudit mélange intime dans ladite tête d'extrusion à partir d'une température supérieure d'au moins 10°C à la température de transition vitreuse du mélange intime de ladite lignine et dudit agent plastifiant.

2. Procédé selon la revendication 1, selon lequel l'étape a/ de mélange intime des composants de ladite formulation comprend les sous-étapes suivantes :
a1/ la préparation (11) de ladite formulation, par mélange de ladite lignine, dudit agent plastifiant et dudit agent réticulant,
a2/ le mélange par extrusion (12) des composants de ladite formulation, à une température supérieure à la température de transition vitreuse de la lignine et à la température de ramollissement de l'agent plastifiant, pour former un extrudât dans lequel la lignine, l'agent plastifiant et l'agent réticulant se trouvent en mélange intime.

3. Procédé selon l'une quelconque des revendications 1 à 2, selon lequel, dans l'étape b/ de filage (13) du mélange intime des composants de la formulation, il est appliqué dans la tête d'extrusion une température supérieure à la température de transition vitreuse dudit mélange intime d'une valeur comprise entre 10 et 150 °C, de préférence entre 30°C et 100°C, et préférentiellement comprise entre 60°C et 90°C.

4. Procédé selon l'une quelconque des revendications 1 à 3, selon lequel la lignine et l'agent plastifiant sont tels, et en proportions telles, que la température de transition vitreuse du mélange intime de ladite lignine et dudit agent plastifiant est comprise entre 0 et 180°C, de préférence entre 20 et 100°C.

5. Procédé selon l'une quelconque des revendications 1 à 4, selon lequel la lignine présente une masse molaire moyenne en masse comprise entre 1 000 et 100 000 g/mol, de préférence comprise entre 1 500 et 10 000 g/mol.

6. Procédé selon l'une quelconque des revendications 1 à 5, selon lequel l'agent plastifiant est un polymère, de préférence choisi parmi les polyéthers, les polycarboxylates et les polyesters, ou tout mélange de tels polymères.

7. Procédé selon l'une quelconque des revendications 1 à 5, selon lequel l'agent plastifiant est un polymère d'acrylonitrile fusible.

8. Procédé selon l'une quelconque des revendications 1 à 7, selon lequel l'agent plastifiant présente une température de transition vitreuse, le cas des températures de transition vitreuse, inférieure(s) à 150 °C, au moins une température de transition vitreuse dudit agent plastifiant étant de préférence comprise entre -100 et 100°C, et de préférence comprise entre -60 et 60°C.

9. Procédé selon l'une quelconque des revendications 1 à 8, selon lequel l'agent réticulant est choisi parmi :
- les benzoxazines, les époxy, les oxazolines, les polyoxyméthylènes, les aldéhydes, l'hexaméthylènetétramine et l'hexaméthylèneméthoxymélamine ;
- les composés présentant une fonctionnalité supérieure ou égale à deux dont les fonctions chimiques sont choisies dans le groupe constitué des fonctions : benzoxazine, époxy (glycidyl éther en particulier), isocyanate, anhydride, acide carboxylique, méthylol et ester, ces fonctions chimiques pouvant être identiques ou différentes,
ou tout mélange de tels composés.

10. Procédé selon l'une quelconque des revendications 1 à 9, selon lequel l'agent réticulant est apte à initier une réaction de réticulation avec la lignine en moins de 10 minutes, de préférence en moins de 5 minutes, à une température comprise entre 30 et 190°C, de préférence comprise entre 80 et 170°C.

11. Procédé selon l'une quelconque des revendications 1 à 10, selon lequel l'agent réticulant est apte à réticuler avec la lignine à température ambiante.

12. Procédé selon l'une quelconque des revendications 1 à 11, selon lequel ladite formulation comprend les pourcentages en poids suivants, par rapport au poids total de la formulation :
- 50 à 98 %, de préférence 60 à 90 %, et préférentiellement 65 à 80 %, de lignine,
- et/ou 1 à 49 %, de préférence 5 à 30 %, préférentiellement 10 à 25 %, d'agent plastifiant,
- et/ou 1 à 25 %, de préférence 2 à 10 %, préférentiellement 2,5 à 5 %, d'agent réticulant.

13. Procédé selon l'une quelconque des revendications 1 à 12, selon lequel ladite formulation comprend un ou plusieurs additifs choisis parmi les charges carbonées de taille nanométrique, notamment parmi les nanotubes de carbone et le graphène, seuls ou en mélange.

14. Procédé selon l'une quelconque des revendications 1 à 13, comprenant une étape finale de stockage de ladite fibre à base de lignine à température ambiante, de préférence pendant une durée supérieure à 1 jour.

15. Formulation pour la mise en oeuvre d'un procédé de préparation de fibres à base de lignine par la voie fondue selon l'une quelconque des revendications 1 à 14, **caractérisée en ce qu'**elle comprend :
- de la lignine non chimiquement modifiée,
- un agent plastifiant miscible avec ladite lignine,
- et un agent réticulant apte à initier une réaction de réticulation avec ladite lignine en moins de 10 minutes à partir d'une température supérieure d'au moins 10°C à la température de transition vitreuse du mélange intime de ladite lignine et dudit agent plastifiant.

16. Formulation selon la revendication 15, dans laquelle l'agent plastifiant est un polymère d'acrylonitrile fusible.

17. Extrudât à base de lignine susceptible d'être obtenu à l'issue de l'étape a/ de mélange intime (11, 12) des composants de la formulation d'un procédé selon l'une quelconque des revendications 1 à 14, se présentant notamment sous forme de granulés.

## Patentansprüche

1. Verfahren zur Herstellung von Fasern auf Ligninbasis durch Schmelzen, **dadurch gekennzeichnet, dass** es umfasst:
a/ inniges Mischen (11, 12) der Bestandteile einer Formulierung, umfassend:
- Lignin,
- einen Weichmacher, der mit dem Lignin mischbar ist,
- und ein Vernetzungsmittel, das in der Lage ist, mit dem Lignin zu vernetzen,
unter Bedingungen, unter denen keine Vernetzung des Vernetzungsmittels und des Lignins erfolgt,
b/ Spinnen (13) der so erhaltenen innigen Mischung in einer Heißextrusionsvorrichtung, die am Endstück einen Extrusionskopf umfasst, um Endlosfäden zu bilden, durch Anwenden, in der Extrusionsvorrichtung, von Bedingungen derart, dass:
- die in der Extrusionsvorrichtung angewendeten Temperaturen höher sind als die Glasübergangstemperatur der innigen Mischung,
- und die Temperaturen, die Verweilzeit der innigen Mischung in der Extrusionsvorrichtung und die Verweilzeit der innigen Mischung in dem Extrusionskopf derart sind, dass die Vernetzungsreaktion des Vernetzungsmittels und des Lignins nur in dem Extrusionskopf initiiert wird,
c/ gegebenenfalls Ziehen (14) der erhaltenen Fäden, um Fasern auf Ligninbasis von großer Länge zu bilden,
wobei das Vernetzungsmittel derart ausgewählt ist, dass seine Vernetzungsreaktion mit dem Lignin in einer Zeit initiiert wird, die kürzer ist als die Verweilzeit der innigen Mischung in dem Extrusionskopf, ausgehend von einer Temperatur, die um mindestens 10 °C höher ist als die Glasübergangstemperatur der innigen Mischung des Lignins und des Weichmachers.

2. Verfahren nach Anspruch 1, wobei der Schritt a/ des innigen Mischens der Bestandteile der Formulierung die folgenden Teilschritte umfasst:
a1/ Herstellen (11) der Formulierung durch Mischen des Lignins, des Weichmachers und des Vernetzungsmittels,
a2/ Extrusionsmischen (12) der Bestandteile der Formulierung bei einer Temperatur, die höher ist als die Glasübergangstemperatur des Lignins und die Erweichungstemperatur des Weichmachers, um ein Extrudat zu bilden, in dem sich das Lignin, der Weichmacher und das Vernetzungsmittel in inniger Mischung befinden.

3. Verfahren nach einem der Ansprüche 1 bis 2, wobei in dem Schritt b/ des Spinnens (13) der innigen Mischung der Bestandteile der Formulierung im Extrusionskopf eine Temperatur angewendet wird, die um einen Wert im Bereich zwischen 10 und 150 °C, vorzugsweise zwischen 30 °C und 100 °C, und bevorzugt im Bereich zwischen 60 °C und 90 °C höher ist als die Glasübergangstemperatur der innigen Mischung.

4. Verfahren nach einem der Ansprüche 1 bis 3, wobei das Lignin und der Weichmacher derart sind und in solchen Anteilen vorliegen, dass die Glasübergangstemperatur der innigen Mischung des Lignins und des Weichmachers im Bereich zwischen 0 und 180 °C, vorzugsweise zwischen 20 und 100 °C, liegt.

5. Verfahren nach einem der Ansprüche 1 bis 4, wobei das Lignin eine massenmittlere Molmasse im Bereich zwischen 1.000 und 100.000 g/mol, vorzugsweise im Bereich zwischen 1.500 und 10.000 g/mol, aufweist.

6. Verfahren nach einem der Ansprüche 1 bis 5, wobei der Weichmacher ein Polymer ist, vorzugsweise ausgewählt aus Polyethern, Polycarboxylaten und Polyestern, oder jeder Mischung solcher Polymere.

7. Verfahren nach einem der Ansprüche 1 bis 5, wobei der Weichmacher ein schmelzbares Acrylnitrilpolymer ist.

8. Verfahren nach einem der Ansprüche 1 bis 7, wobei der Weichmacher eine Glasübergangstemperatur, im Falle von Glasübergangstemperaturen, von weniger als 150 °C aufweist, wobei mindestens eine Glasübergangstemperatur des Weichmachers vorzugsweise im Bereich zwischen -100 und 100 °C, und bevorzugt im Bereich zwischen -60 und 60 °C liegt.

9. Verfahren nach einem der Ansprüche 1 bis 8, wobei das Vernetzungsmittel ausgewählt ist aus:
- Benzoxazinen, Epoxiden, Oxazolinen, Polyoxymethylenen, Aldehyden, Hexamethylentetramin und Hexamethylenmethoxymelamin;
- Verbindungen, die eine Funktionalität von größer oder gleich zwei aufweisen, deren chemische Funktionen ausgewählt sind aus der Gruppe bestehend aus den Funktionen: Benzoxazin, Epoxid (insbesondere Glycidylether), Isocyanat, Anhydrid, Carbonsäure, Methylol und Ester, wobei diese chemischen Funktionen gleich oder verschieden sein können,
oder jede Mischung solcher Verbindungen.

10. Verfahren nach einem der Ansprüche 1 bis 9, wobei das Vernetzungsmittel in der Lage ist, eine Vernetzungsreaktion mit dem Lignin in weniger als 10 Minuten, vorzugsweise in weniger als 5 Minuten, bei einer Temperatur im Bereich zwischen 30 und 190 °C, vorzugsweise im Bereich zwischen 80 und 170 °C, zu initiieren.

11. Verfahren nach einem der Ansprüche 1 bis 10, wobei das Vernetzungsmittel in der Lage ist, mit dem Lignin bei Umgebungstemperatur zu vernetzen.

12. Verfahren nach einem der Ansprüche 1 bis 11, wobei die Formulierung die folgenden Gewichtsprozente, bezogen auf das Gesamtgewicht der Formulierung, umfasst:
- 50 bis 98 %, vorzugsweise 60 bis 90 %, und bevorzugt 65 bis 80 %, Lignin,
- und/oder 1 bis 49 %, vorzugsweise 5 bis 30 %, bevorzugt 10 bis 25 %, Weichmacher,
- und/oder 1 bis 25 %, vorzugsweise 2 bis 10 %, bevorzugt 2,5 bis 5 %, Vernetzungsmittel.

13. Verfahren nach einem der Ansprüche 1 bis 12, wobei die Formulierung ein oder mehrere Additive umfasst, ausgewählt aus kohlenstoffhaltigen Füllstoffen in Nanogröße, insbesondere aus Kohlenstoffnanoröhren und Graphen, einzeln oder in Mischung.

14. Verfahren nach einem der Ansprüche 1 bis 13, umfassend einen abschließenden Schritt des Lagerns der Faser auf Ligninbasis bei Umgebungstemperatur, vorzugsweise über eine Dauer von mehr als 1 Tag.

15. Formulierung zur Umsetzung eines Verfahrens zur Herstellung von Fasern auf Ligninbasis durch Schmelzen nach einem der Ansprüche 1 bis 14, **dadurch gekennzeichnet, dass** sie umfasst:
- chemisch nicht modifiziertes Lignin,
- einen Weichmacher, der mit dem Lignin mischbar ist,
- und ein Vernetzungsmittel, das in der Lage ist, eine Vernetzungsreaktion mit dem Lignin in weniger als 10 Minuten, ausgehend von einer Temperatur, die um mindestens 10 °C höher ist als die Glasübergangstemperatur der innigen Mischung des Lignins und des Weichmachers, zu initiieren.

16. Formulierung nach Anspruch 15, wobei der Weichmacher ein schmelzbares Acrylnitrilpolymer ist.

17. Extrudat auf Ligninbasis, das am Ende des Schritts a/ des innigen Mischens (11, 12) der Bestandteile der Formulierung eines Verfahrens nach einem der Ansprüche 1 bis 14 erhalten werden kann und sich insbesondere in Form von Granulat darstellt.

## Claims

1. Method for melt-preparation of lignin-based fibers, **characterized in that** it comprises:
a/ the intimate blending (11, 12) of the components of a formulation comprising:
- lignin,
- a plasticizer miscible with said lignin,
- and a cross-linking agent capable of cross-linking with said lignin,
in conditions in which no cross-linking of the cross-linking agent and of the lignin occurs,
b/ the spinning (13) of the intimate blend thus obtained in a hot extrusion device comprising an extrusion head in a terminal part, in order to form continuous threads, by application in said extrusion device of conditions such that:
- the temperatures applied in said extrusion device are higher than the glass-transition temperature of said intimate blend,
- and the temperatures, the residence time of said intimate blend in said extrusion device and the residence time of said intimate blend in said extrusion head are such that the cross-linking reaction of the cross-linking agent and lignin is initiated only in the extrusion head,
c/ when appropriate, the drawing (14) of the threads obtained in order to form lignin-based fibers of great length,
with the cross-linking agent being chosen in such a way that the cross-linking reaction thereof with said lignin is initiated in a time less than said residence time of said intimate blend in said extrusion head at temperatures above a temperature at least 10°C greater than the glass-transition temperature of said intimate blend of said lignin and of said plasticizer.

2. Method according to claim 1, wherein the step a/ of intimate blending of the components of said formulation comprises the following substeps:
a1/ the preparation (11) of said formulation, by blending of said lignin, said plasticizer and said cross-linking agent,
a2/ the blending by extrusion (12) of the components of said formulation, at a temperature greater than the glass-transition temperature of the lignin and than the softening temperature of the plasticizer, in order to form an extrudate in which the lignin, the plasticizer and the cross-linking agent are in an intimate blend.

3. Method according to any of claims 1 to 2, wherein, in the step b/ of spinning (13) of the intimate blend of the components of the formulation, it is applied in the extrusion head a temperature that is greater than the glass-transition temperature of said intimate blend by a value of between 10 and 150 °C, preferably of between 30°C and 100°C, and preferentially of between 60°C and 90°C.

4. Method according to any of claims 1 to 3, wherein the lignin and the plasticizer are such, and in proportions such, that the glass-transition temperature of said intimate blend of said lignin and of said plasticizer is between 0 and 180°C, preferably between 20 and 100°C.

5. Method according to any of claims 1 to 4, wherein the lignin has a weight average molecular weight between 1,000 and 100,000 g/mol, preferably between 1,500 and 10,000 g/mol.

6. Method according to any of claims 1 to 5, wherein the plasticizer is a polymer, preferably chosen from polyethers, polycarboxylates and polyesters, or any blend of such polymers.

7. Method according to any of claims 1 to 5, wherein the plasticizer is a fusible acrylonitrile polymer.

8. Method according to any of claims 1 to 7, wherein the plasticizer has a glass-transition temperature, where applicable glass-transition temperatures, of less than 150 °C, at least one glass-transition temperature of said plasticizer being preferably between -100 and 100°C, and preferably between -60 and 60°C.

9. Method according to any of claims 1 to 8, wherein the cross-linking agent is chosen from:
- benzoxazines, epoxies, oxazolines, polyoxymethylenes, aldehydes, hexamethylenetetramine and hexamethylenemethoxymelamine;
- compounds that have a functionality greater than or equal to two of which the chemical functions are chosen in the group consisting of the functions: benzoxazine, epoxy (glycidyl ether in particular), isocyanate, anhydride, carboxylic acid, methylol and ester, with these chemical functions being identical or different,
or any blend of such compounds.

10. Method according to any of claims 1 to 9, wherein the cross-linking agent is capable of initiating a cross-linking reaction with the lignin in less than 10 minutes, preferably in less than 5 minutes, at a temperature between 30 and 190°C, preferably between 80 and 170°C.

11. Method according to any of claims 1 to 10, wherein the cross-linking agent is capable of cross-linking with the lignin at ambient temperature.

12. Method according to any of claims 1 to 11, wherein said formulation comprises the following percentages by weight, with respect to the total weight of the formulation:
- 50 to 98%, preferably 60 to 90%, and preferentially 65 to 80%, of lignin,
- and/or 1 to 49%, preferably 5 to 30%, preferentially 10 to 25%, of plasticizer,
- and/or 1 to 25%, preferably 2 to 10%, preferentially 2.5 to 5%, of cross-linking agent.

13. Method according to any of claims 1 to 12, wherein said formulation comprises one or several additives chosen from carbon fillers of nanometric size, in particular from nanotubes of carbon and graphene, alone or in a mixture.

14. Method according to any of claims 1 to 13, comprising a final step of storage of said lignin-based fiber at ambient temperature, preferably for a duration greater than 1 day.

15. Formulation for the implementing of a method of melt-preparation of lignin-based fibers according to any of claims 1 to 14, **characterized in that** it comprises:
- lignin that is not chemically modified,
- a plasticizer miscible with said lignin,
- and a cross-linking agent capable of initiating a cross-linking reaction with said lignin in less than 10 minutes at temperatures above a temperature at least 10°C greater than the glass-transition temperature of said intimate blend of said lignin and of said plasticizer.

16. Formulation according to claim 15, wherein the plasticizer is a fusible acrylonitrile polymer.

17. Lignin-based extrudate obtainable at the end of the step a/ of intimate blending (11, 12) of the components of the formulation of a method according to any of claims 1 to 14, having in particular the form of granules.
